# EUROPEAN PATENT APPLICATION

(11) **EP 4 319 399 A1**
(43) Date of publication of application: **07.02.2024**
(21) Application number: 22778918.7
(22) Date of filing: 29.03.2022
(51) Int. Cl.: H04W 72/04

(54) **ELECTRONIC DEVICE, COMMUNICATION METHOD, STORAGE MEDIUM AND COMPUTER PROGRAM PRODUCT**

(30) Priority: 02.04.2021 CN 202110359046
(71) Applicant: Sony Group Corporation, Tokyo 108-0075 (JP)
(72) Inventor: CAO, Jianfei, Beijing 100028 (CN)
(74) Representative: D Young & Co LLP
(86) International application number: PCT/CN2022/083596
(87) International publication number: WO 2022/206736

(57) **Abstract**

The present application relates to an electronic device, a communication method, a storage medium and a computer program product in a wireless communication system. Disclosed is an electronic device at a base station. The electronic device comprises processing circuitry configured to: send a single DCI to a LTE, the single DCI being used for scheduling multiple downlink transmissions associated with the UE, and the single DCI indicating a respective scheduled beam for each of the multiple downlink transmissions; determine a respective actual beam for each of the multiple downlink transmissions; and perform a respective downlink transmission of the multiple downlink transmissions using the determined respective actual beam.

## Description

### CROSS-REFERENCE TO RELATED APPLICATIONS

This application claims the priority of Chinese patent application with application number 202110359046.2, titled "ELECTRONIC DEVICE, COMMUNICATION METHOD, STORAGE MEDIUM, AND COMPUTER PROGRAM PRODUCT" filed on April 2, 2021, the entire content of which is incorporated herein by reference.

### TECHNICAL FIELD

The present disclosure relates to a field of wireless communication, and in particular, to an electronic device, a communication method, a storage medium and a computer program product used in a wireless communication system.

### BACKGROUND

The frequency bands used for wireless communication are gradually expanding. In a standardization process of 3GPP Rel. 17, a specific frequency band (52.6GHz-71GHz) higher than FR1 (450MHz-6GHz) and FR2 (24.25GHz-52.6GHz) is getting attention. Since the specific frequency band is relatively high with abundant spectrum resources, a wider optional subcarrier spacing may be used. Although the wider subcarrier spacing may facilitate spectrum utilization, it may also reduce a duration of an OFDM symbol. Accordingly, a length of a time slot may also be reduced. Performing beam switch in reduced time slots will increase implementation complexity of a UE. In addition, the higher frequency band also means a greater path loss.

### SUMMARY

Electronic devices and methods provided by the present disclosure are capable of improving radio transmissions in a wireless communication system.

An aspect of the present disclosure relates to an electronic device used at a base station, the electronic device comprising processing circuitry configured to perform operations of: sending a single Downlink Control Information (DCI) to a user UE, the single DCI used for scheduling a plurality of downlink transmissions associated with the LTE, the single DCI indicating a respective scheduled beam for each of the plurality of downlink transmissions; determining a respective actual beam used for each of the plurality of downlink transmissions; and performing a respective downlink transmission of the plurality of downlink transmissions using the determined respective actual beam.

An aspect of the present disclosure relates to an electronic device used on a LTE side, the electronic device comprising processing circuitry configured to perform operations of: receiving a single DCI from a base station, the single DCI used for scheduling a plurality of downlink transmissions associated with the LTE, the single DCI indicating a respective scheduled beam for each of the plurality of downlink transmissions; determining a respective actual beam used for each of the plurality of downlink transmissions; and performing a respective downlink transmission of the plurality of downlink transmissions using the determined respective actual beam.

An aspect of the present disclosure relates to an electronic device used at a base station, the electronic device comprising processing circuitry configured to perform operations of: sending a single DCI to a LTE, the single DCI indicating a plurality of sets of Channel State Information-Reference Signal (CSI-RS) resources across a plurality of time slots, wherein the plurality of CSI-RS resource sets are associated with a same reporting configuration; in each of the plurality of time slots, sending a CSI-RS transmission to the UE using a respective CSI-RS resource set in the plurality of CSI-RS resource sets; and in a report based on said same reporting configuration, receiving from the UE CSI reports associated with measurements of the plurality of time slots.

An aspect of the present disclosure relates to an electronic device used on a LTE side, the electronic device comprising processing circuitry configured to perform operations of: receiving a single DCI from a base station, the single DCI indicating a plurality of sets of channel state information-reference signal (CSI-RS) resources across a plurality of time slots, wherein the plurality of CSI-RS resource sets are associated with a same reporting configuration; in each of the plurality of time slots, receiving from the base station a CSI-RS transmission that is sent using a respective CSI-RS resource set in the plurality of CSI-RS resource sets, to perform measurements; and in a report based on said same reporting configuration, sending to the base station CSI reports associated with the measurements of the plurality of time slots.

An aspect of the present disclosure relates to an electronic device used at a base station, the electronic device comprising processing circuitry configured to perform operations of: sending a single DCI to a LTE, the single DCI configured to schedule a plurality of Synchronization Signal Block (SSB) resources into a plurality of time slots; and sending an SSB transmission in each of the plurality of time slots.

An aspect of the present disclosure relates to an electronic device used on a LTE side, the electronic device comprising processing circuitry configured to perform operations of: receiving a single DCI from a base station, the single DCI being configured to schedule a plurality of synchronization signal block (SSB) resources into a plurality of time slots; and receiving an SSB transmission in each of the plurality of time slots.

An aspect of the present disclosure relates to an electronic device used at a base station, the electronic device comprising processing circuitry configured to perform operations of: sending a single DCI to a LTE, the single DCI being configured to trigger a Sounding Reference Signal (SRS) resource set comprising a plurality of SRS resources and schedule the plurality of SRS resources into a plurality of time slots; and receiving an SRS transmission from the LTE in each of the plurality of time slots.

An aspect of the present disclosure relates to an electronic device used on a LTE side, the electronic device comprises processing circuitry configured to perform operations of: receiving a single DCI from a base station, the single DCI being configured to trigger a Sounding Reference Signal (SRS) resource set comprising a plurality of SRS resources, and the plurality of SRS resources being scheduled into a plurality of time slots; and sending an SRS transmission to base station 110 in each of the plurality of time slots.

An aspect of the present disclosure relates to an electronic device used at a base station, the electronic device comprising processing circuitry configured to perform operations of: configuring a first offset associated with a first transmission between the base station and a LTE; configuring a Channel Occupying Time (COT) associated with the base station and the UE, the COT being included in a COT message, the COT indicating a specific time period during which the base station and LTE are allowed to communicate with each other on an unlicensed frequency band; calculating a specific time for the first transmission, based on the COT and the first offset; and performing the first transmission at the specific time.

An aspect of the present disclosure relates to an electronic device used on a LTE side, the electronic device comprising processing circuitry configured to perform operations of: configuring a first offset associated with a first transmission between a base station and the LTE; configuring a Channel Occupancy Time (COT) associated with the base station and the LTE, the COT being included in a COT message, the COT indicating a specific time period during which the base station and the LTE are allowed to communicate with each other on an unlicensed frequency band; calculating a specific time for the first transmission, based on the COT and the first offset; and performing the first transmission at the specific time.

An aspect of the present disclosure relates to an electronic device used at a base station, the electronic device comprising processing circuitry configured to perform operations of: determining a Channel Occupancy Time (COT) associated with the base station and the LTE, the COT being included in a COT message, the COT indicating a specific time period during which the base station and the LTE are allowed to communicate with each other on an unlicensed frequency band; determining whether an expected transmission time for a specific transmission of periodic transmissions with the LTE is within the COT; determining the specific transmission as a deactivated transmission in response to the expected transmission time for the specific transmission not being within the COT; and determining the specific transmission as an activated transmission in response to the expected transmission time for the specific transmission being within the COT.

An aspect of the present disclosure relates to an electronic device used on a LTE side, the electronic device comprising processing circuitry configured to perform operations of: determining a Channel Occupancy Time (COT) associated with a base station and the LTE, the COT being included in a COT message, the COT indicating a specific time period during which the base station and the LTE are allowed to communicate with each other on an unlicensed frequency band; determining whether an expected transmission time for a specific transmission of periodic transmissions with the LTE is within the COT; determining the specific transmission as a deactivated transmission, in response to the expected transmission time for the specific transmission not being within the COT; and determining the specific transmission as an activated transmission, in response to the expected transmission time for the specific transmission being within the COT.

Another aspect of the present disclosure is a method performed at a base station, and the method may include the above operations performed by the processing circuitry of the electronic device(s) on the base station side.

Another aspect of the present disclosure is a method performed on a LTE side, and the method may include the above operations performed by the processing circuitry of the electronic device(s) on the LTE side.

Another aspect of the present disclosure relates to a computer-readable storage medium having one or more instructions stored thereon, which, when executed by one or more processing circuits of an electronic device, cause the electronic device to perform any method as described in the present disclosure.

Another aspect of the present disclosure relates to a computer program product comprising a computer program which, when executed by a processor, implements any method as described in the present disclosure.

### BRIEF DESCRIPTION OF THE DRAWINGS

The above and other purposes and advantages of the present disclosure will be further described below in conjunction with specific embodiments and with reference to the accompanying drawings. In the drawings, same or corresponding technical features or components will be indicated by same or corresponding reference numerals.
FIG. 1 illustrates a schematic diagram of a wireless communication system according to an embodiment of the present disclosure.
FIG. 2 illustrates a block diagram of an electronic device according to an embodiment of the present disclosure.
FIG. 3 illustrates an example flowchart of a method according to an embodiment of the present disclosure.
FIG. 4 illustrates an example flowchart of a method according to an embodiment of the present disclosure.
FIGS. 5A-5C illustrate schematic diagrams of multiple application examples of an improved beam selection scheme according to embodiments of the present disclosure.
FIG. 6 illustrates an example flowchart of a method according to an embodiment of the present disclosure.
FIG. 7 illustrates an example flowchart of a method according to an embodiment of the present disclosure.
FIG. 8A illustrates an example of a cross-slot CSI-RS transmission scheme that is scheduled by a single DCI.
FIG. 8B illustrates an example of an improved cross-slot CSI-RS transmission scheme that is scheduled by single DCI according to an embodiment of the present disclosure.
FIG. 9 illustrates an example flowchart of a method according to an embodiment of the present disclosure.
FIG. 10 illustrates an example flowchart of a method according to an embodiment of the present disclosure.
FIG. 11 illustrates an example of an improved cross-slot SSB transmission scheme that is scheduled by a single DCI according to an embodiment of the present disclosure.
FIG. 12 illustrates an example flowchart of a method according to an embodiment of the present disclosure.
FIG. 13 illustrates an example flowchart of a method according to an embodiment of the present disclosure.
FIG. 14A illustrates an example of an improved cross-slot SRS transmission scheme that is scheduled by a single DCI according to an embodiment of the present disclosure.
FIG. 14B illustrates another example of the improved cross-slot SRS transmission scheme that is scheduled by a single DCI according to an embodiment of the present disclosure.
FIG. 15 illustrates an example flowchart of a method according to an embodiment of the present disclosure.
FIG. 16 illustrates an example flowchart of a method according to an embodiment of the present disclosure.
FIG. 17A illustrates an example of a transmission associated with a COT.
FIG. 17B illustrates an example of a COT-triggered signal/channel transmission scheme according to an embodiment of the present disclosure.
FIG. 18 illustrates an example flowchart of a method according to an embodiment of the present disclosure.
FIG. 19 illustrates an example flowchart of a method according to an embodiment of the present disclosure.
FIG. 20 illustrates an example of a COT-activated signal/channel transmission scheme according to an embodiment of the present disclosure.
FIG. 21 is a block diagram showing a first example of a schematic configuration of a gNB to which the technology of the present disclosure may be applied.
FIG. 22 is a block diagram showing a second example of a schematic configuration of a gNB to which the technology of the present disclosure may be applied.
FIG. 23 is a block diagram showing an example of a schematic configuration of a communication device to which the technology of the present disclosure may be applied.
FIG. 24 is a block diagram showing an example of a schematic configuration of a vehicle navigation device to which the technology of the present disclosure may be applied.

While the embodiments described in the present disclosure may be susceptible to various modifications and alternative forms, specific embodiments thereof are shown by way of example in the drawings and described in detail herein. It should be understood, however, that the drawings and detailed description thereto are not to limit the embodiments to the particular forms disclosed, but on the contrary, the intention is to cover all modifications, equivalents and alternatives that fall within the spirit and scope of the claims.

### DETAILED DESCRIPTION

Exemplary embodiments of the present disclosure will be described below with reference to the accompanying drawings. For the sake of clarity and conciseness, not all features of the embodiments are described in the specification. It should be understood, however, that many implementation-specific settings must be made in implementing an embodiment in order to achieve the developer's specific goals, for example, to meet those constraints associated with the device and business, and that these constraints may vary from one implementation to another. Moreover, it should also be understood that development work, while potentially very complex and time-consuming, would only be a routine undertaking for those skilled in the art having the benefit of the present disclosure.

Here, it should also be understood that in order to avoid obscuring the present disclosure with unnecessary details, only the processing steps and/or device structures that are closely related to at least the solution according to the present disclosure are shown in the drawings, while other details that are of little relevance to the present disclosure are omitted.

### 1. EXAMPLE WIRELESS COMMUNICATION SYSTEM AND EXAMPLE ELECTRONIC DEVICE

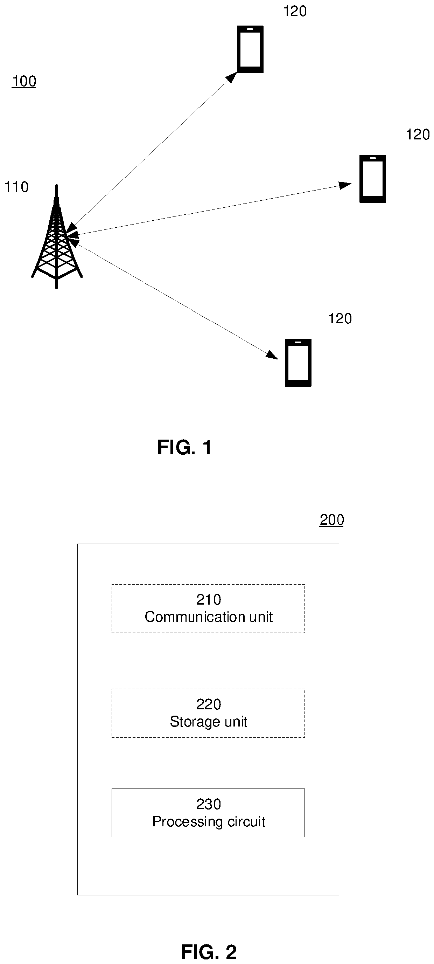

FIG. 1 illustrates a schematic diagram of a wireless communication system 100 according to an embodiment of the present disclosure. Various techniques described in the present disclosure may be performed within wireless communication system 100. Wireless communication system 100 may include a base station 110 and a UE 120. It should be understood that, although only one base station 110 and three LTEs 120 are shown in FIG. 1, wireless communication system 100 may also include any other suitable number of base stations and UEs.

Base station 110 is an example of a network side device in wireless communication system 100. In the disclosure, the terms "base station" and "network side device" may be used interchangeably. Operations of base station 110 may alternatively be implemented with any network side device. Base station 110 may be implemented as any type of base station. For example, base station 110 may be implemented as an eNB, such as a macro eNB and a small eNB. A small eNB may be an eNB that covers a cell smaller than a macro cell, such as a pico eNB, a micro eNB, and a home (femto) eNB. For another example, base station 110 may also be implemented as a gNB, such as a macro gNB and a small gNB. A small gNB may be a gNB that covers a cell smaller than a macro cell, such as a pico gNB, a micro gNB, and a home (femto) gNB. Alternatively, the base station may be implemented as any other type of base station, such as a NodeB or a base transceiver station (BTS).

UE 120 is an example of a user side device in wireless communication system 100. UE 120 may be implemented as any type of terminal device. For example, UE 120 may be implemented as a mobile terminal (such as a smart phone, a tablet personal computer (PC), a notebook PC, a portable game terminal, a portable/dongle type of mobile router, and a digital camcorder apparatus) or a vehicle terminal (such as a vehicle navigation device). For another example, UE 120 may be implemented as a terminal performing machine-to-machine (M2M) communication (also referred to as a machine type communication (MTC) terminal). Also, UE 120 may be a wireless communication module (such as an integrated circuit module including a single chip) that is mounted on each of the above terminals.

Base station 110 and UE 120 may perform wireless communications according to any suitable communication protocol. For example, wireless communication may be performed according to cellular communication protocols. The cellular communication protocols may include 4G, 5G, and any cellular communication protocols that are being developed or will be developed. Accordingly, base station 110 and UE 120 may communicate on one or more corresponding wireless communication frequency band. Examples of the wireless communication frequency bands may include, but are not limited to, FR1 frequency band, FR2 frequency band, frequency band of 52.6GHz-71GHz, or any other suitable frequency band.

FIG. 2 illustrates a block diagram of an electronic device 200 according to an embodiment of the present disclosure. Electronic device 200 may include a communication unit 210, a storage unit 220 and a processing circuit 230.

Communication unit 210 may be used to receive or send radio transmissions. For example, the radio transmissions may include one or more downlink transmissions from base station 110 to LTE 120 and/or one or more uplink transmissions from UE 120 to base station 110. The radio transmissions may be used to convey various control signaling (e.g., radio resource control (RRC), or DCI) and/or user data. The radio transmissions may also be used to convey one or more synchronization signals, reference signals, or measurement signals (e.g., SSB, CSI-RS, SRS, etc.). Communication unit 210 may perform functions such as up-conversion, digital-to-analog conversion on sent radio signals, and/or perform functions, such as down-conversion or analog-to-digital conversion, on received radio signals. In an embodiment of the present disclosure, communication unit 210 may be implemented using various technologies. For example, communication unit 210 may be implemented as communication interface components, such as an antenna device, a radio frequency circuit, or a part of a baseband processing circuit. Communication unit 210 is drawn with dashed lines, as it may alternatively be located within processing circuit 230 or external to electronic device 200.

Storage unit 220 may store information generated by processing circuit 230, information received from or sent to other devices through communication unit 210, programs, machine codes, and data for operations of electronic device 200, and the like. Storage unit 220 may be a volatile memory and/or a nonvolatile memory. For example, storage unit 220 may include, but is not limited to, a random access memory (RAM), a dynamic random access memory (DRAM), a static random access memory (SRAM), a read only memory (ROM), and a flash memory. Storage unit 220 is drawn with dashed lines, as it may alternatively be located within processing circuit 230 or external to electronic device 200.

Processing circuit 230 may be configured to perform one or more operations, thereby providing various functions of electronic device 200. As an example, processing circuit 230 may perform one or more corresponding operations by executing one or more executable instructions stored in storage unit 220. For example, in an embodiment where electronic device 200 is used to implement a base station side device as described in the present disclosure, processing circuit 230 may be configured to perform one or more operations on the base station side as described in the present disclosure. In an embodiment where electronic device 200 is used to implement a LTE side device as described in the present disclosure, processing circuit 230 may be configured to perform one or more operations on the LTE side as described in the present disclosure. Electronic device 200 (and more specifically, processing circuit 230) may be used to perform one or more operations described herein in relation to base station 110. In this case, electronic device 200 may be implemented as base station 110 itself, a part of base station 110, or a control device for controlling base station 110. For example, electronic device 200 may be implemented as a chip for controlling base station 110. In addition, electronic device 200 (more specifically, processing circuit 230) may also be used to perform one or more operations described herein in relation to LTE 120. In this case, electronic device 200 may be implemented as UE 120 itself, a part of UE 120, or a control device for controlling LTE 120. For example, electronic device 200 may be implemented as a chip for controlling LTE 120.

It should be understood that the various units described above are exemplary and/or preferred modules for implementing processes described in the present disclosure. These modules may be one or more hardware units (such as central processing units, field programmable gate arrays, digital signal processors or application specific integrated circuits, etc.) and/or one or more software modules (such as computer readable programs). The above content is not exhaustive description of modules used for implementing various steps described below. However, as long as there is a step for performing a certain process, there may be a corresponding module or unit (implemented by hardware and/or software) for implementing that process. Technical solutions defined by all combinations of the steps described below and units corresponding to those steps are included in the content of the present disclosure, as long as the technical solutions they constitute are complete and applicable.

Furthermore, a device constituted by various units may be incorporated into a hardware device (such as a computer) as a functional module. In addition to those functional modules, the computer may of course have further hardware or software components.

Example embodiments of the present disclosure will be further described below with reference to the accompanying drawings. It should be understood that, in the following description, various methods executed on the base station side may be performed by processing circuit 230 of electronic device 200 that have been implemented on the base station side. Hereinafter, for convenience, those methods will be described as being performed by base station 110. However, those skilled in the art would understand that those methods may be alternatively executed by a part of base station 110, or by a control device of base station 110. In addition, various methods executed on the UE side may be performed by processing circuit 230 of electronic device 200 that have been implemented on the LTE side. Hereinafter, for convenience, those methods are described as being performed by LTE 120. However, those skilled in the art may understand that those methods may alternatively be executed by a part of UE 120, or by a control device of LTE 120.

### 2. IMPROVED BEAM SELECTION SCHEME

In the latest 3GPP standardization progress, a length of a time slot has been reduced. For example, for a frequency band of 52.6GHz-71GHz, a length of a time slot that is occupied by transmissions such as physical downlink shared channel (PDSCH) transmission and physical uplink shared channel (PUSCH) transmission is reduced. It is considered that multiple transmissions of such type may be scheduled by a single DCI. In related technologies, a single DCI usually is able to schedule only one single transmission, and a corresponding beam selection scheme was designed for that single transmission. Such a beam selection scheme is no longer suitable for a scenario where a single DCI schedules multiple transmissions. Improved beam selection scheme is desired.

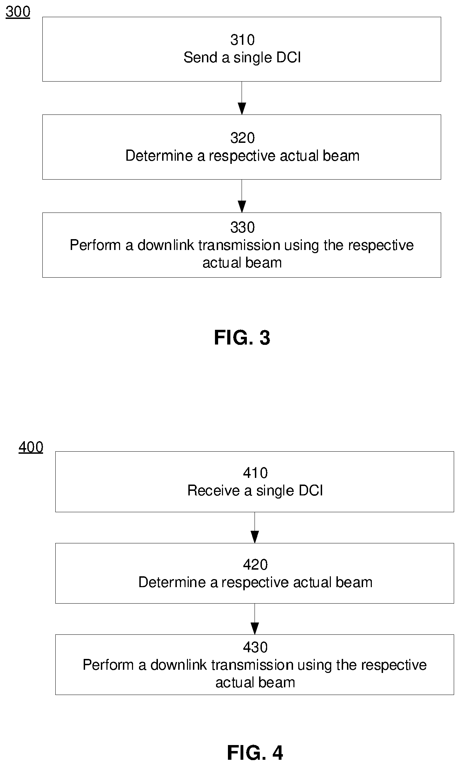

FIG. 3 illustrates an example flowchart of a method 300 according to an embodiment of the present disclosure. Method 300 may be used to implement an improved beam selection scheme according to an embodiment of the present disclosure. Method 300 may be executed at base station 110. Method 300 may include step 310 to step 330.

In step 310, base station 110 may be configured to send a single DCI to LTE 120. The single DCI may be used to schedule multiple downlink transmissions associated with UE 120. Specifically, the single DCI may indicate to UE 120 a respective scheduled beam for each downlink transmission of the multiple downlink transmissions. Here, the respective scheduled beam refers to a desired transmit beam that is scheduled by the DCI for performing said each downlink transmission.

In step 320, base station 110 may be configured to determine a respective actual beam for each downlink transmission of the multiple downlink transmissions. Here, the respective actual beam refers to a transmit beam that base station 110 is to actually use to perform a respective downlink transmission. As further discussed below, the determined respective actual beam for each downlink transmission may be same as the respective scheduled beam that is scheduled by the DCI for that downlink transmission, or may be different from that respective scheduled beam.

In step 330, base station 110 may be configured to perform a respective downlink transmission of the multiple downlink transmissions using a determined respective actual beam. Specifically, if the determined respective actual beam is different from the respective scheduled beam, base station 110 may be configured to use the respective actual beam instead of the respective scheduled beam to send the respective downlink transmission to LTE 120. If the determined respective actual beam is the same as the respective scheduled beam, base station 110 may be configured to send the respective downlink transmission to UE 120 using the respective scheduled beam, as scheduled by the DCI.

In some embodiments, examples of the multiple downlink transmissions that may be scheduled in the single DCI may include multiple PDSCH transmissions. The PDSCH transmissions may be used to carry downlink user data. In other embodiments, the multiple downlink transmissions may include multiple Aperiodic Channel State Information-Reference Signal (AP CSI-RS) transmissions. The AP CSI-RS transmissions may be used to perform channel measurement (e.g., beam scanning) to obtain channel state information.

According to an embodiment of the present disclosure, in step 310, base station 110 may be configured to include Transmission Configuration Information (TCI) in the single DCI, so as to indicate respective scheduled beams for the multiple downlink transmissions associated with UE 120. In some embodiments, the respective scheduled beams that are scheduled for each of the multiple downlink transmissions may be different. In some other embodiments, the respective scheduled beams that are scheduled for each of the multiple downlink transmissions may be a same beam, which may advantageously save an overhead for indicating the respective scheduled beams for every downlink transmission (e.g., fewer fields in the DCI being occupied).

According to an embodiment of the present disclosure, base station 110 may be configured to determine the respective actual beam for each of the multiple downlink transmissions, based on one or more parameters associated with capability of LTE 120. In some embodiments, the one or more parameters associated with capability of LTE 120 may be reported by LTE 120 to base station 110 when LTE 120 accesses to a cellular network. In some other embodiments, base station 110 may obtain the one or more parameters at any other suitable time or in any other suitable manner.

In some embodiments, the one or more parameters reported by UE 120 to base station 110 may indicate that UE 120 will use a same receive beam for multiple downlink transmissions that are scheduled by the single DCI. For example, UE 120 may send a first parameter to base station 110, where the first parameter may indicate that UE 120 will use the same receive beam for all the multiple downlink transmissions scheduled by the single DCI. In a condition where capability of LTE 120 is so insufficient that a beam switch may not be completed within a certain period of time, UE 120 may send the first parameter, so as to reduce occurrences of beam switch for LTE 120. As an example, the first parameter may be the *sameBeamForPDSCH* parameter that is associated with PDSCH transmissions. For AP CSI-RS transmissions, a similar parameter may be defined. The first parameter may be included in a capability report of LTE 120 to be sent to base station 110. Base station 110 may be configured to determine, based on the first parameter associated with capability of LTE 120, that the respective actual beams for each of the multiple downlink transmissions associated with UE 120 are a same beam.

The same beam may be determined in any manner. By way of example instead of limitation, base station 110 may be configured to determine a respective default beam associated with an earliest downlink transmission in the multiple downlink transmissions to be said same beam for every one of the multiple downlink transmissions. That is, base station 110 may be configured to firstly determine the respective default beam that is associated with the earliest downlink transmission, and then apply the default beam to each of the multiple downlink transmissions. In the present disclosure, a default beam may refer to a beam that base station 110 or UE 120 should use based on pre-configured rules. Unlike respective scheduled beams that are dynamically scheduled by a DCI, the default beam may not be dynamically scheduled by the DCI.

In some other embodiments, one or more parameters reported by LTE 120 to base station 110 may indicate that UE 120 allows to use different beams for multiple downlink transmissions scheduled by a single DCI. LTE 120 may send a second parameter to base station 110, where the second parameter may indicate that UE 120 allows to use different beams for multiple downlink transmissions scheduled by the DCI. For example, UE 120 may transmit the second parameter if UE 120 is capable enough to complete beam switch within a certain time (thereby making beam switch possible). As an example, the second parameter may be a *separateBeamForPDSCH* parameter associated with PDSCH transmissions. For AP CSI-RS transmissions, a similar parameter may also be defined. The second parameter may be included in, for example, a capability report of LTE 120 to be sent to base station 110. Accordingly, base station 110 may be configured to determine, based on the second parameter associated with the capability of LTE 120, that not all respective actual beams for the multiple downlink transmissions associated with UE 120 are the same, but instead, these beams may contain different beams. It should be understood that the second parameter has a correspondence with the first parameter. In one embodiment, the first parameter and the second parameter may be reported by UE 120 to base station 110 as different parameter fields. In another embodiment, the first parameter and the second parameter may be reported by LTE 120 to base station 110 as different values for a same parameter field.

If the respective actual beams used for multiple downlink transmissions associated with UE 120 may include different beams, base station 110 may be configured to determine each respective actual beam based on a third parameter associated with the capability of LTE 120. The third parameter may indicate a time threshold required for LTE 120 to prepare the scheduled beam indicated by the DCI. Base station 110 may determine the time threshold based on the third parameter. As an example, if the downlink transmissions are PDSCH transmissions, base station 110 may be configured to determine the time threshold based on a *timeDurationForQCL* parameter reported by LTE 120. The *timeDurationForQCL* parameter may indicate a time period that is required by LTE 120 from receiving the DCI till finishing preparation of the beam indicated by the DCI for a PDSCH transmission. Example values for the *timeDurationForQCL* parameter may include 7, 14, 28, or any other suitable number of OFDM symbols. As another example, if the downlink transmissions are AP CSI-RS transmissions, base station 110 may be configured to determine the time threshold based on a *beamSwitchTiming* parameter reported by LTE 120. Example values for the *beamSwitchTiming* parameter may include 14, 28, 42, or any other suitable number of OFDM symbols. The *beamSwitchTiming* parameter may indicate a time period required for LTE 120 from receiving the DCI till switching to a beam that is indicated by the DCI for an AP CSI-RS transmission. UE 120 may not be able to prepare (or switch to) the scheduled beam as indicated by the DCI before the time threshold determined based on the third parameter lapses.

In the foregoing embodiments, base station 110 may be configured to divide, based on the time threshold, the multiple downlink transmissions to be performed in time. Specifically, base station 110 may be configured to determine, from the multiple downlink transmissions, a first set of downlink transmissions that are to be scheduled before the time threshold and a second set of downlink transmissions that are to be scheduled after the time threshold. Base station 110 may expect that, when performing the first set of downlink transmissions, UE 120 does not have enough time to prepare/switch to respective receive beams scheduled by the DCI, while when performing the second set of downlink transmissions, UE 120 has enough time to prepare/switch to respective receive beams scheduled by the DCI. Therefore, for each downlink transmission in the first set of downlink transmissions, base station 110 may be configured to use the default beam instead of the respective scheduled beam that is indicated by the DCI, as the respective actual beam for that downlink transmission. For each downlink transmission in the second set of downlink transmissions, base station 110 may be configured to use the respective scheduled beam that is indicated by the single DCI, as the respective actual beam for that downlink transmission.

As previously described, the default beam is not dynamically scheduled by the DCI, but may be specified based on pre-configured rules. In some embodiments, the default beam may be determined based on a control channel that UE 120 is listening to. For example, the default beam may be specified as a beam that was used by UE 120 for the most recently received control channel transmission (e.g., PDCCH transmission, etc.). In this case, the default beam associated with different time slots may vary. More specifically, for each time slot, it may be specified that a respective default beam associated with that time slot may be determined based on a CORESET with a smallest ID in a search space that is most recently monitored by LTE 120. The CORESET here refers to a set of resources used for downlink control channel transmissions. The respective default beam may be the beam that corresponds to the CORESET with the smallest ID. Since each downlink transmission in the first set of downlink transmissions might be scheduled in different time slots, the respective default beam corresponding to each downlink transmission may also be different from one another. In this case, if each downlink transmission in the first set of downlink transmissions uses a respective default beam that is associated with the time slot where the transmission is located, UE 120 may be required to frequently switch beams between individual time slots. With reduced slot lengths, this requires greater UE 120 capabilities, which increases implementation complexity of LTE 120.

Therefore, base station 110 may also be configured to determine whether the respective actual beams for each downlink transmission in the first set of downlink transmissions are the same or different. For example, the determination may be made based on a fourth parameter associated with the capability of UE 120. An example of the fourth parameter may be *trackDefaultBeamForPDSCH* associated with PDSCH. For AP CSI-RS or other downlink transmissions, a similar parameter may be defined. The fourth parameter may be included in, for example, the capability report of LTE 120 to be sent to base station 110.

In some cases, base station 110 may receive from UE 120 an indication that UE 120 is unable or is not desired to perform a beam switch. For example, base station 110 may receive a fourth parameter from UE 120 whose value indicates that UE 120 expects the respective actual beams for each downlink transmission in the first set of downlink transmissions to be the same. Base station 110 may be configured to use, based on the value of the fourth parameter, a same respective actual beam for each downlink transmission in the first set of downlink transmissions.

The same respective actual beam for each downlink transmission in the first set of downlink transmissions may be determined in various ways. By way of example instead of limitation, base station 110 may be configured to determine a default beam associated with an earliest downlink transmission of the multiple downlink transmissions as the same respective actual beam. That is, base station 110 may be configured to first determine the default beam associated with the earliest downlink transmission, and then apply the default beam to each downlink transmission in the first set of downlink transmissions, thereby avoiding frequent beam switches.

In some cases, base station 110 may receive from UE 120 an indication that UE 120 is capable of or is desired for beam switches. For example, base station 110 may receive from UE 120 a fourth parameter whose value indicates that UE 120 allows the respective actual beams for each downlink transmission in the first set of downlink transmissions to be different, which may allow LTE 120 to use beams with improved performance. Base station 110 may be configured to use, based on the value of the fourth parameter, different respective actual beams for the first set of downlink transmissions.

Different respective actual beams for each downlink transmission in the first set of downlink transmissions may be determined in various ways. By way of example instead of limitation, base station 110 may be configured to use, for each downlink transmission in the first set of downlink transmissions, a default beam corresponding to that downlink transmission. For example, for each downlink transmission in the first set of downlink transmissions, base station 110 may determine a beam that corresponds to a CORESET with a smallest ID in a search space recently monitored by LTE 120, as the respective default beam, and use it as the respective actual beam for that downlink transmission. The respective default beam may vary from one slot to another slot.

FIG. 4 illustrates an example flowchart of a method 400 according to an embodiment of the present disclosure. Method 400 may be used to implement an improved beam selection scheme according to an embodiment of the present disclosure. Method 400 may be executed at LTE 120. Method 400 may include step 410 to step 430.

In step 410, UE 120 may be configured to receive a single DCI from base station 110. The single DCI may be used to schedule multiple downlink transmissions associated with UE 120. Specifically, the single DCI may indicate to UE 120 a respective scheduled beam for each of the multiple downlink transmissions. UE 120 may parse information in the DCI (e.g., TCI) to determine a respective scheduled beam for each of the multiple downlink transmissions. For LTE 120, the respective scheduled beam refers to a desired receive beam scheduled by the DCI for performing each downlink transmission. As already discussed above, the respective scheduled beams scheduled for each downlink transmission might be different, and preferably, they may be the same.

In step 420, UE 120 may be configured to determine a respective actual beam for each of the multiple downlink transmissions. For LTE 120, the respective actual beam refers to a receive beam that UE 120 will actually use to receive the respective downlink transmission. As discussed further below, the determined respective actual beam for each downlink transmission may or may not be the same as the respective scheduled beam for that downlink transmission.

In step 430, UE 120 may be configured to use the determined respective actual beam to receive a respective downlink transmission of the multiple downlink transmissions. Specifically, if the determined respective actual beam is different from the respective scheduled beam, UE 120 may be configured to receive the respective downlink transmission from base station 110 using the respective actual beam instead of the respective scheduled beam. If the determined respective actual beam is the same as the respective scheduled beam, UE 120 may be configured to receive the respective downlink transmission from base station 110 using the respective scheduled beam, as scheduled by the DCI.

As already discussed above, examples of the multiple downlink transmissions that may be scheduled in the single DCI may include multiple PDSCH transmissions, or multiple AP CSI-RS transmissions.

According to an embodiment of the present disclosure, UE 120 may be configured to report one or more parameters associated with the capability of UE 120 (for example, one or more of the first to fourth parameters discussed above) to base station 110, for indicating to base station 110 a beam selection scheme of the UE for the multiple downlink transmissions scheduled by the single DCI. For example, UE 120 may be configured to report those parameters to base station 110 when accessing the cellular network (or any other suitable time). When determining a respective actual beam for each of the multiple downlink transmissions scheduled by the single DCI, LTE 120 may select a respective actual beam based on the reported parameters, thereby corresponding to the beam selection scheme of base station 110 as discussed above.

In some embodiments, UE 120 may be configured to determine that the respective actual beams for each of the multiple downlink transmissions are a same beam. For example, in a condition where the capability of LTE 120 is so insufficient that a beam switch may not be completed within a certain period of time, UE 120 may send the first parameter to base station 110, which may indicate that UE 120 will use the same receive beam for all multiple downlink transmissions scheduled by the single DCI, thereby avoiding beam switches. As discussed previously, examples of the first parameter may include *sameBeamForPDSCH* associated with PDSCH transmissions, or a similar parameter for AP CSI-RS transmissions. In this case, UE 120 may be configured to receive each of the multiple downlink transmissions using the same receive beam. By way of example instead of limitation, UE 120 may be configured to determine a respective default beam that is associated with an earliest downlink transmission in the multiple downlink transmissions, as the same beam for each downlink transmission in the multiple downlink transmissions.

In some other embodiments, UE 120 may be configured to determine that the respective actual beams for each of the multiple downlink transmissions may include different beams. For example, if the capability of LTE 120 is sufficient so that UE 120 may be able to complete a beam switch within a certain period of time, UE 120 may send a second parameter to base station 110, which may indicate that UE 120 allows to use different beams for the multiple downlink transmissions scheduled by the DCI, thereby making beam switches possible. As discussed previously, examples of the first parameter may include *separateBeamForPDSCH* associated with PDSCH transmissions, or a similar parameter for AP CSI-RS transmissions. In this case, UE 120 may be configured to receive the multiple downlink transmissions using different receive beams.

If UE 120 determines that the respective actual beams for the multiple downlink transmissions associated with UE 120 may include different beams, UE 120 may also be configured to determine a time threshold associated with the time period required for UE 120 to prepare the scheduled beam indicated by the DCI. The time threshold may be determined based on the capability of LTE 120 itself. UE 120 may be configured to send a parameter associated with the time threshold to base station 110 as a third parameter. As previously discussed, examples of the third parameter may include a *timeDurationForQCL* parameter or a *beamSwitchTiming* parameter. UE 120 may be configured to determine, from the multiple downlink transmissions, a first set of downlink transmissions that are scheduled before the time threshold and a second set of downlink transmissions that are scheduled after the time threshold. For each downlink transmission in the first set of downlink transmissions, UE 120 may be configured to use a default beam instead of the respective scheduled beam indicated by the single DCI, as the respective actual beam for that downlink transmission. For each downlink transmission in the second set of downlink transmissions, UE 120 may be configured to use the respective scheduled beam that is indicated by the single DCI, as the respective actual beam for that downlink transmission.

As discussed above, since each downlink transmission in the first set of downlink transmissions may be scheduled in a different time slot, the respective default beam corresponding to each downlink transmission may also be different from each other. UE 120 may determine, based on its own capability, whether respective actual beams for each downlink transmission in the first set of downlink transmissions are a same beam or are different beams, and further indicate a result of the determination to base station 110. For example, UE 120 may send a fourth parameter that is associated with the determined result to base station 110.

In some cases, UE 120 may send to base station 110 an indication that UE 120 is unable or is not desired to perform beam switches for the first set of downlink transmissions. For example, UE 120 may send to base station 110 a fourth parameter whose value indicates that UE 120 expects the respective actual beams for each downlink transmission in the first set of downlink transmissions to be the same (i.e., no beam switch). Accordingly, UE 120 may be configured to receive each downlink transmission in the first set of downlink transmissions using the same beam. The same beam may be determined in various ways. By way of example instead of limitation, in response to a determination that the respective actual beams for each downlink transmission in the first set of downlink transmissions are the same, UE 120 may be configured to determine the default beam associated with the earliest downlink transmission in the multiple downlink transmissions as that same beam.

In other cases, UE 120 may send to base station 110 an indication that UE 120 is capable of or is desired for beam switches for the first set of downlink transmissions. For example, UE 120 may send to base station 110 a fourth parameter whose value indicates that UE 120 allows the respective actual beams for each downlink transmission in the first set of downlink transmissions to be different. Accordingly, UE 120 may be configured to receive the first set of downlink transmissions using different beams. By way of example instead of limitation, UE 120 may be configured to use, for each downlink transmission in the first set of downlink transmissions, a default beam corresponding to that downlink transmission. For example, in response to a determination that the respective actual beams for each downlink transmission in the first set of downlink transmissions may be different beams, UE 120 may be configured to, for each of the first set of downlink transmissions, determine a beam corresponding to the CORESET with a smallest ID in a search space most recently monitored by LTE 120 as the default beam corresponding to that downlink transmission, and use it as the respective actual beam for that downlink transmission. In this case, the respective actual beams (i.e., respective default beams) for each downlink transmission in the first set of downlink transmissions may vary from one slot to another.

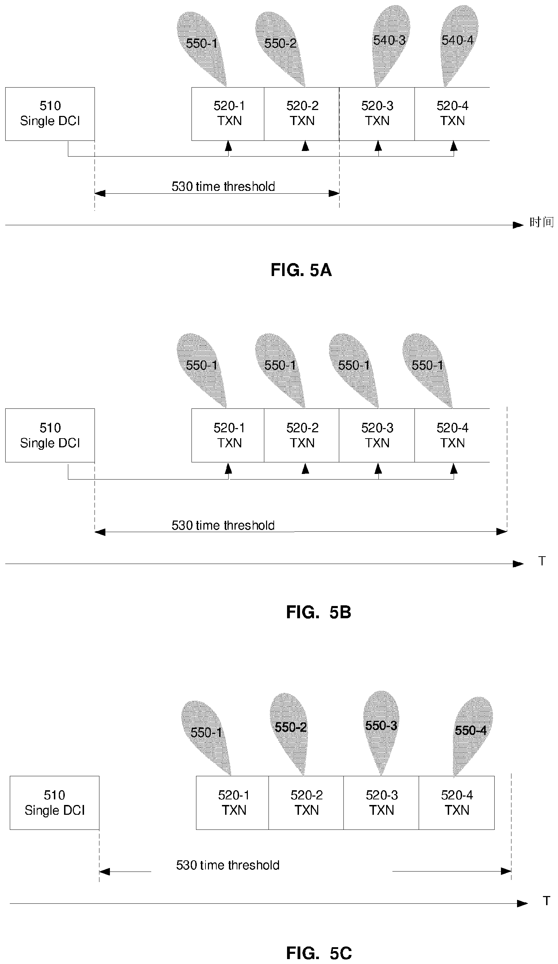

FIGS. 5A-5C illustrate schematic diagrams of multiple application examples of the improved beam selection scheme according to embodiments of the present disclosure.

FIG. 5A illustrates a single DCI 510 and multiple downlink transmissions 520-1 to 520-4 (collectively referred to as 520) that are scheduled by that DCI. The multiple downlink transmissions 520-1 to 520-4 are serialized in time. In this example, the multiple downlink transmissions 520 are divided into a first set of downlink transmissions (520-1, 520-2) located before time threshold 530 and a second set of downlink transmissions (520-3, 520-4) located after time threshold 530. For the second set of downlink transmissions, UE 120 has enough time to prepare the respective receive beams that are scheduled by the DCI 510, so the respective scheduled beams 540-3 and 540-4 indicated by the DCI 510 may be used to perform downlink transmissions 520-3, 520-4. Downlink transmissions 520-1, 520-2 in the first set of downlink transmissions may be performed with default beams 550-1 and 550-2. In some examples, default beams 550-1 and 550-2 may be a same beam, which may be default beam 550-1 that is associated with the earliest downlink transmission 520-1 in the first set of downlink transmissions. In this case, a beam switch may only occur between transmissions 520-2 and 520-3. In other examples, default beams 550-1 and 550-2 may be different beams, so a beam switch may also occur between transmissions 520-1 and 520-2.

FIG. 5B illustrates a specific embodiment, in which multiple downlink transmissions 520-1 to 520-4 scheduled by the single DCI are all located before time threshold 530, and are therefore all divided into the first set of downlink transmissions. In this example, a same beam is used for each of downlink transmissions 520-1 through 520-4 in the first set of downlink transmissions. The same beam may be default beam 550-1 associated with the earliest downlink transmission 520-1 in the first set of downlink transmissions. In this example, no beam switch is required.

FIG. 5C illustrates a scenario similar to that of FIG. 5B, in which multiple downlink transmissions 520-1 to 520-4 scheduled by the single DCI are all located before time threshold 530, and are therefore all divided into the first set of downlink transmissions. Unlike the embodiment of FIG. 5B, in the embodiment of FIG. 5C, different respective default beams 550-1 to 550-4 are used for each of downlink transmissions 520-1 to 520-4 in the first set of downlink transmissions, respectively. In this example, one or more beam switches may be performed based on one or more changes in the default beams associated with the different transmissions.

It should be understood that FIG. 5A-FIG. 5C are only one or more exemplary scenarios of the improved beam selection scheme of the present disclosure, which illustrate one or more aspects but not all aspects according to the present disclosure. Furthermore, although FIG. 5A-FIG. 5C illustrate embodiments where a single DCI schedules 4 transmissions, in other embodiments the single DCI may schedule more or fewer transmissions. Also, a length of time threshold 530 may vary.

This section describes various beams used for downlink transmissions, with respect to base station 110 and UE 120 respectively. It should be understood that various beams described for base station 110 are transmit beams that base station 110 may use to send downlink transmissions, while various beams described for UE 120 are receive beams that LTE 120 may use to receive downlink transmissions. It should also be understood that a transmit beam and a receive beam associated with a same downlink transmission may be a matched beam pair. For example, a respective scheduled beam for base station 110 and a respective scheduled beam for LTE 120 that are associated with a same downlink transmission may refer to a matched pair of transmit beamreceive beam, rather than an identical beam.

The improved beam selection scheme of the present disclosure provides a flexible beam selection mechanism. This beam selection mechanism is particularly suitable for a scenario where a single DCI schedules multiple downlink transmissions. This beam selection mechanism allows determining suitable respective actual beams for each of the multiple downlink transmissions. The suitable respective actual beams may be determined, for example, based on the capability of the LTE. In the frequency band of 52.6GHz-71GHz, due to the reduced length of the time slot, higher requirements are placed on the capability of the LTE (e.g., capability of beam switching). The improved beam selection scheme of the present disclosure enables LTEs with different capabilities to adapt to this characteristic of the frequency band of 52.6GHz-71GHz.

It should be understood that the solution of the present disclosure is not limited to a specific frequency band. In addition to the frequency band of 52.6GHz-71 GHz, the solution of the present disclosure may also be applied to any suitable frequency band.

### 3. IMPROVED CROSS-SLOT TRANSMISSION SCHEMEs SCHEDULED BY A SINGLE DCI

### 3.1 Improved cross-slot CSI-RS transmission scheme scheduled by a single DCI

In the Rel.15 and Rel.16 protocols, a single DCI may only trigger one TriggerState. The TriggerState may indicate multiple sets of reference signal resources to be used for multiple CSI-RS transmissions. Each set of the multiple sets of reference signal resources is associated with a respective reporting configuration. Therefore, the multiple sets of reference signal resources are associated with multiple different reporting configurations. Accordingly, for the multiple CSI-RS transmissions triggered by the single DCI, multiple CSI reports will be triggered. Improvement of cross-slot CSI-RS transmission is needed.

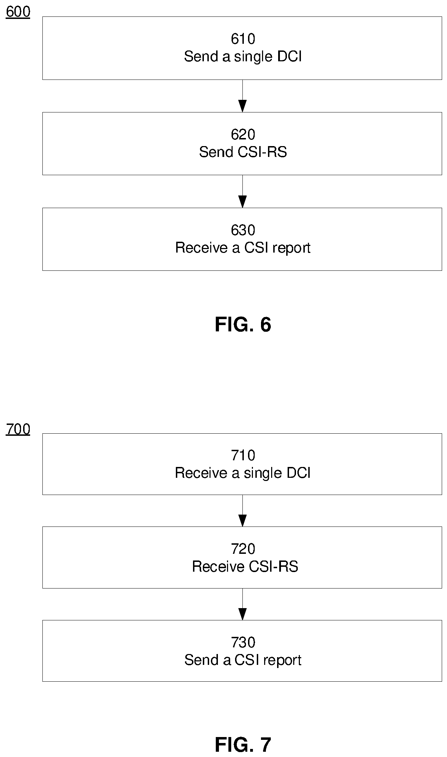

FIG. 6 illustrates an example flowchart of a method 600 according to an embodiment of the present disclosure. Method 600 may be used to implement improved cross-slot CSI-RS transmission according to an embodiment of the present disclosure. Method 600 may be executed at base station 110. Method 600 may include step 610 to step 630.

In step 610, base station 110 may be configured to send a single DCI to LTE 120. The single DCI may indicate multiple CSI-RS resource sets across multiple time slots. The multiple CSI-RS resource sets may be associated with a same reporting configuration. That is, each set of the multiple CSI-RS resource sets is associated with the same reporting configuration, instead of being associated with different reporting configurations. Specifically, the multiple CSI-RS resource sets may be associated with a same CSI *ReportConfig* parameter. Or, CSI *ReportConfig* parameters associated with the multiple CSI-RS resource sets may be set to a same value.

In step 620, base station 110 may be configured to, in each of the multiple time slots, send a CSI-RS transmission to LTE 120 using a respective CSI-RS resource set in the multiple CSI-RS resource sets. CSI-RS transmissions scheduled by a DCI are aperiodic CSI-RS transmissions, i.e., AP CSI-RS transmissions. The sent multiple CSI-RS transmissions may be used to measure downlink channel quality. Since the multiple CSI-RS transmissions span across multiple time slots, the measurement may also span multiple time slots. The measurement in each time slot may obtain a respective measurement result based on the CSI-RS transmission in that time slot.

In step 630, base station 110 may be configured to receive a CSI report associated with measurements of the multiple time slots from LTE 120 in a report that is based on said same reporting configuration. The CSI report may be generated by synthesizing multiple measurement results across the multiple time slots, and the CSI report may describe channel state information that is obtained based on the multiple CSI-RS transmissions across the time slots. Since each of the multiple CSI-RS resource sets is associated with the same reporting configuration, the measurement results obtained based on CSI-RS transmissions sent using each of the CSI-RS resource sets may be associated with the same reporting configuration. The CSI report may be sent by LTE 120 to base station 110 in a single report based on said reporting configuration. This avoids multiple reports due to multiple different reporting configurations, thereby saving overhead.

According to an embodiment of the present disclosure, base station 110 may be configured to configure a value of the repetition parameter (*Repetition*) of each CSI-RS resource set to be closed (*OFF*). The value of the *Repetition* parameter may indicate whether all the CSI-RS resources in the CSI-RS resource set are used for measurement of a same beam or for measurements of multiple beams. The ON value of the *Repetition* parameter indicates that repetition is enabled, that is, all CSI-RS resources in the CSI-RS resource set are used to repeatedly send a same beam. The OFF value of the *Repetition* parameter indicates that repetition is disabled, that is, individual CSI-RS resource in the CSI-RS resource set are used to send multiple different beams. Based on the OFF value of the *Repetition* parameter, base station 110 may be configured to send multiple transmit beams using each CSI-RS resource of one CSI-RS resource set in each time slot, for example, to perform beam scanning.

According to an embodiment of the present disclosure, the CSI report received by base station 110 in step 630 is generated based on the measurement in each of the multiple time slots. The measurement of each time slot may be based on a transmit beam of base station 110 within that time slot and a receive beam of LTE 120 within that time slot. As previously mentioned, base station 110 may be configured to send multiple transmit beams in each time slot for beam scanning. However, UE 120 may not be able to receive CSI-RS transmissions using multiple receive beams. This is because UE 120 may not have sufficient capability to complete beam switches among multiple receive beams in that single time slot, especially if the length of the time slot becomes shorter. Therefore, UE 120 may be configured to receive the CSI-RS transmissions using a single receive beam in each of the multiple time slots, thereby avoiding beam switches within the single slot. UE 120 may use a different single receive beam for each of the multiple time slots. For example, a single receive beam for a first time slot may be different than a single receive beam for a second time slot. In this case, UE 120 may spread multiple receive beams into multiple time slots and may complete beam scanning across the multiple time slots (instead of within a single time slot).

According to an embodiment of the present disclosure, base station 110 and UE 120 may be configured to operate in the frequency band of 52.6GHz-71GHz. As previously discussed, for the frequency band of 52.6GHz-71GHz, the length of the time slot is reduced. The reduced time slot length imposes higher requirements on beam switching capability of LTE 120. By spreading multiple receive beams of LTE 120 into multiple time slots, UE 120 no longer needs to complete multiple beam switches in a single time slot, thereby relaxing the requirements on the capability of UE 120 and reducing the implementation complexity of LTE 120.

FIG. 7 illustrates an example flowchart of a method 700 according to an embodiment of the present disclosure. Method 700 may be used to implement improved cross-slot CSI-RS transmission according to an embodiment of the present disclosure. Method 700 may be executed at UE 120. Method 700 may include step 710 to step 730.

In step 710, UE 120 may be configured to receive a single DCI from base station 110. The single DCI may indicate multiple CSI-RS resource sets across multiple time slots, and the multiple CSI-RS resource sets may be associated with a same reporting configuration.

In step 720, UE 120 may be configured to receive, in each of the multiple time slots, from base station 110 CSI-RS transmissions sent using a respective CSI-RS resource set in the multiple CSI-RS resource sets, to perform measurements. Since the multiple CSI-RS transmissions span across multiple time slots, the measurement process may also span the multiple time slots. The measurement in each time slot may obtain a respective measurement result based on the CSI-RS transmission in that time slot.

In step 730, UE 120 may be configured to send to base station 110 a CSI report associated with measurements of the multiple time slots in a report that is based on said same reporting configuration. UE 120 may be configured to generate the CSI report by synthesizing multiple measurement results across the multiple time slots, where the CSI report may describe channel state information that is obtained based on multiple CSI-RS transmissions across the multiple time slots. Advantageously, UE 120 may be configured to send the CSI report to base station 110 in a single report that is based on the same reporting configuration.

According to an embodiment of the present disclosure, a value of the repetition parameter (*Repetition*) of each CSI-RS resource set may be configured as closed (*OFF*). Based on this parameter value, UE 120 may determine that base station 110 is configured to send multiple transmit beams using individual CSI-RS resources in one CSI-RS resource set in each time slot.

According to an embodiment of the present disclosure, UE 120 may be configured to perform measurements using a different single receive beam in each of multiple time slots. Specifically, UE 120 may be configured to use a single receive beam in each time slot to receive CSI-RS transmissions sent by base station 110 using multiple transmit beams. UE 120 may generate a measurement result associated with the time slot based on the receiving. In this way, UE 120 may spread multiple receive beams into multiple time slots, thereby completing beam scanning across multiple time slots (instead of within a single time slot). LTE 120 may avoid a beam switch within a single time slot. As discussed above, when the length of the time slot is relatively short (for example, when LTE 120 operates in the frequency band of 52.6GHz-71GHz), this design may reduce the implementation complexity of LTE 120.

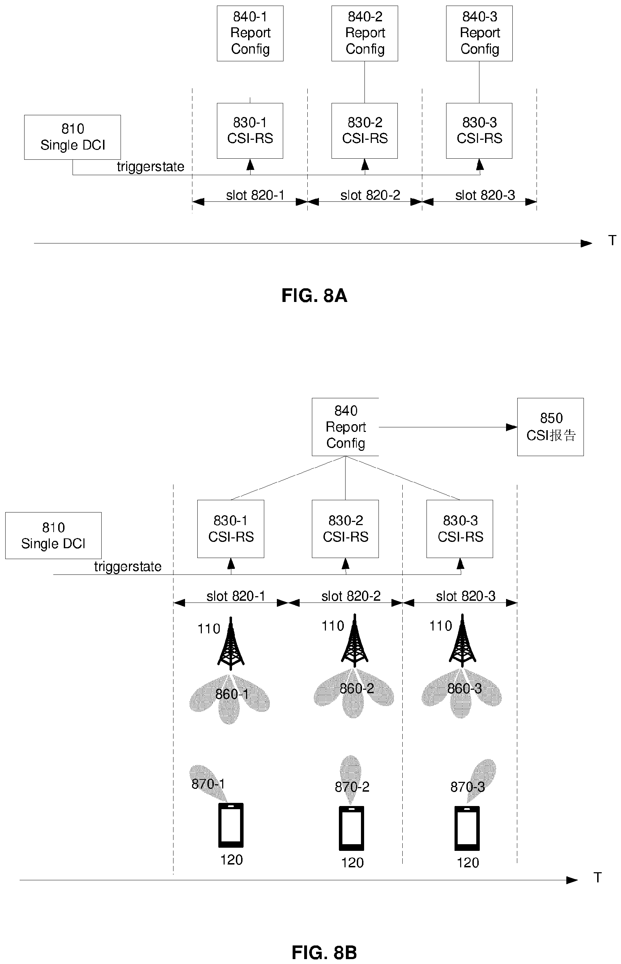

FIG. 8A illustrates an example of a cross-slot CSI-RS transmission scheme that is scheduled by a single DCI. In this example, a single DCI 810 may schedule multiple CSI-RS transmissions, for example, CSI-RS transmissions 830-1, 830-2, 830-3, with a single trigger state. CSI-RS transmissions 830-1, 830-2, 830-3 are scheduled in time slots 820-1, 820-2, 820-3, respectively. Each f CSI-RS transmissions 830-1, 830-2, 830-3 is associated with a respective reporting configuration 840-1, 840-2, 840-3, respectively. As a result, for multiple CSI-RS transmissions scheduled by the single DCI 810, three reports that are associated with reporting configurations 840-1, 840-2, 840-3 respectively will be triggered.

FIG. 8B illustrates an example of an improved cross-slot CSI-RS transmission scheme that is scheduled by a single DCI according to an embodiment of the present disclosure. Similar to FIG. 8A, a single DCI 810 may schedule multiple CSI-RS transmissions, for example, CSI-RS transmissions 830-1, 830-2, 830-3, with a single trigger state. CSI-RS transmissions 830-1, 830-2, 830-3 are scheduled in time slots 820-1, 820-2, 820-3, respectively. Unlike FIG. 8A, in the example of FIG. 8B, each of CSI-RS transmission 830-1, 830-2, 830-3 is associated with a same reporting configuration 840. This reporting configuration 840 may only trigger a single report 850. In this way, the overhead of configuring reporting configurations and the overhead of reporting CSI reports may be reduced.

In the example of FIG. 8B, transmit beams and receive beams used by base station 110 and UE 120 in individual time slots are also shown. In the first time slot 820-1, base station 110 may be configured to transmit a CSI-RS transmission using a first set of transmit beams 860-1 to perform beam scanning, while UE 120 may only use a single receive beam 870-1 to receive these CSI-RS transmissions. Measurement results associated with the first time slot may be based on the first set of transmit beams 860-1 and the receive beam 870-1. In the second time slot 820-2, base station 110 may be configured to transmit a CSI-RS transmission using a second set of transmit beams 860-2 to perform beam scanning, while UE 120 may only use a single receive beam 870-2 to receive these CSI-RS transmissions. Measurement results associated with the second time slot may be based on the second set of transmit beams 860-2 and the receive beam 870-2. In the third time slot 820-3, base station 110 may be configured to transmit a CSI-RS transmission using a third set of transmit beams 860-3 to perform beam scanning, while UE 120 may only use a single receive beam 870-3 to receive these CSI-RS transmissions. Measurement results associated with the third time slot may be based on the third set of transmit beams 860-3 and the receive beam 870-3. CSI report 850 may be generated based on the synthesis of these measurement results of the first to third time slots. In this example, three receive beams 870-1, 870-2, 870-3 of LTE 120 are spread over three time slots so that UE 120 does not need to perform any beam switch within any single time slot.

The improved cross-slot CSI-RS transmission scheme of the present disclosure reduces overhead associated with CSI-RS configuration and CSI reporting. Furthermore, one or more preferred embodiments of the scheme also enable LTEs to adapt to the reduced length of the time slot (e.g., in the frequency band of 52.6GHz-71GHz). Nevertheless, the scheme of the present disclosure are not limited to the specific frequency band. In addition to the frequency band of 52.6GHz-71GHz, the scheme of the present disclosure may also be applied to any suitable frequency band.

### 3.2 Improved multi-slot SSB transmission scheduled by a single DCI

A multi-slot SSB transmission scheduled by a single DCI faces similar issues to the previously described multi-slot CSI-RS transmission. The present disclosure provides an improved multi-slot SSB transmission scheduled by a single DCI.

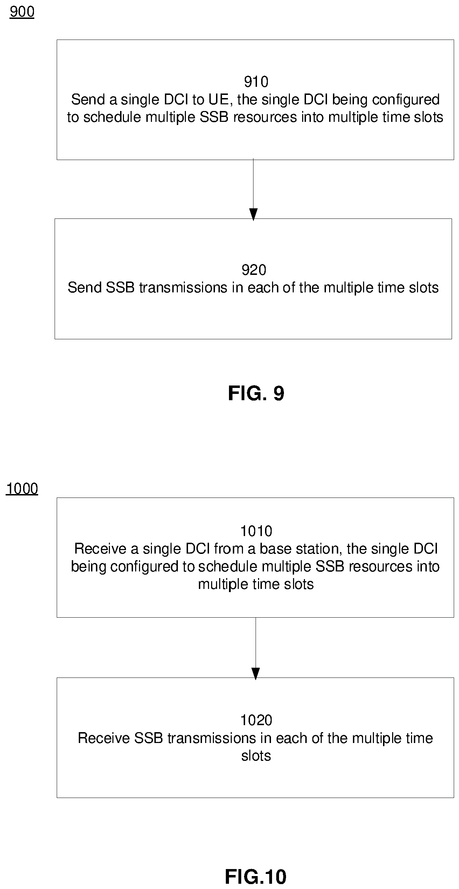

FIG. 9 illustrates an example flowchart of a method 900 according to an embodiment of the present disclosure. Method 900 may be used to implement the improved multi-slot SSB transmission according to an embodiment of the present disclosure. Method 900 may be executed at base station 110.

Method 900 may include steps 910 to 930. In step 910, base station 110 may be configured to send a single DCI to LTE 120. The single DCI may be configured to schedule multiple SSB resources into multiple time slots. In step 920, base station 110 may be configured to send an SSB transmission to LTE 120 in each of the multiple time slots.

According to an embodiment of the present disclosure, in each of the multiple time slots, base station 110 may be configured to use multiple transmit beams in different directions corresponding to the multiple SSB resources to perform the SSB transmission, to perform a downlink beam scanning. That is, base station 110 may be configured to send the SSB transmission by switching among multiple transmit beams in different directions in a single time slot.

According to an embodiment of the present disclosure, the downlink beam scanning in each of the multiple time slots may be based on a respective single receive beam of the LTE. Although base station 110 may use multiple transmit beams in different directions in each single time slot, UE 120 may be configured to use only one respective single receive beam in each time slot. Also, the respective receive beams used by UE 120 in different time slots may be different. The downlink beam scanning in each time slot may be based on the multiple transmit beams in different directions sent by base station 110 and the single receive beam used by LTE 120 in that time slot. In other words, base station 110 may scan multiple transmit beams within a single time slot, while UE 120 is configured to scan multiple receive beams across multiple time slots (rather than within a single time slot).

FIG. 10 illustrates an example flowchart of a method 1000 according to an embodiment of the present disclosure. Method 1000 may be used to implement improved multi-slot SSB transmission according to an embodiment of the present disclosure. Method 1000 may be executed at UE 120.

Method 1000 may include step 1010 and step 1020. In step 1010, UE 120 may be configured to receive a single DCI from base station 110. The single DCI may be configured to schedule multiple SSB resources into multiple time slots. In step 1020, UE 120 may be configured to receive SSB transmissions in each of the multiple time slots.

According to an embodiment of the present disclosure, UE 120 may be configured to use a single receive beam in each time slot to receive SSB transmissions from base station 110. The respective receive beams used by UE 120 in different time slots may be different. In this way, UE 120 is configured to scan multiple receive beams across multiple time slots (rather than within a single time slot).

Unlike LTEs, in each time slot, base station 110 may use multiple transmit beams in different directions, as previously described. Accordingly, in each time slot, the SSB transmissions received by LTE 120 from base station 110 are sent by base station 110 using multiple transmit beams in different directions corresponding to the multiple SSB resources.

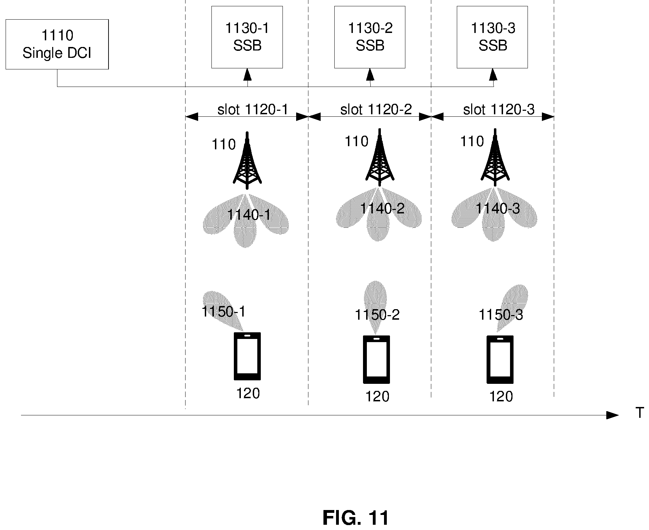

FIG. 11 illustrates an example of an improved cross-slot SSB transmission scheme scheduled by a single DCI according to an embodiment of the present disclosure. In this example, a single DCI 1110 may schedule multiple SSB transmissions, for example, SSB transmissions 1130-1, 1130-2, 1130-3. SSB transmissions 1130-1, 1130-2, 1130-3 are scheduled in consecutive time slots 1120-1, 1120-2, 1120-3, respectively. In the first time slot 1120-1, base station 110 may be configured to transmit SSB transmissions using a first set of transmit beams 1140-1, while UE 120 may receive these SSB transmissions using only a single receive beam 1170-1. Measurement results associated with the first time slot may be based on the first set of transmit beam 1140-1 and the receive beam 1170-1. In the second time slot 1120-2, base station 110 may be configured to transmit SSB transmissions using a second set of transmit beams 1140-2, while UE 120 may receive these SSB transmissions using only a single receive beam 1170-2. Measurement results associated with the second time slot may be based on the second set of transmit beams 1140-2 and the receive beam 1170-2. In the third time slot 1120-3, base station 110 may be configured to transmit SSB transmissions using a third set of transmit beams 1140-3, while UE 120 may receive these SSB transmissions using only a single receive beam 1170-3. Measurement results associated with the third time slot may be based on the third set of transmit beam 1140-3 and the receive beam 1170-3. In this example, the three receive beams 1170-1, 1170-2, 1170-3 of LTE 120 are spread across three time slots, so no beam switch is needed in any single time slot.

According to an embodiment of the present disclosure, base station 110 and UE 120 may be configured to operate in the frequency band of 52.6GHz-71GHz. As previously discussed, in the case of the frequency band of 52.6GHz-71GHz, the length of the time slot may be reduced. By spreading multiple receive beams of LTE 120 into multiple time slots, UE 120 no longer needs to complete one or more beam switches in a single time slot that has a reduced length. This relaxes the requirements on the capability of beam switching of LTE 120 and reduces the implementation complexity of UE 120. Nevertheless, the scheme of the present disclosure is not limited to specific frequency bands. In addition to the frequency band of 52.6GHz-71GHz, the scheme of the present disclosure may also be applied to any suitable frequency band.

### 3.3 Improved cross-slot SRS transmission scheme scheduled by a single DCI

The cross-slot SRS transmission scheme scheduled by a single DCI faces similar issues to the previously described multi-slot CSI-RS or SSB transmission. The present disclosure provides an improved cross-slot SRS transmission scheme scheduled by a single DCI.

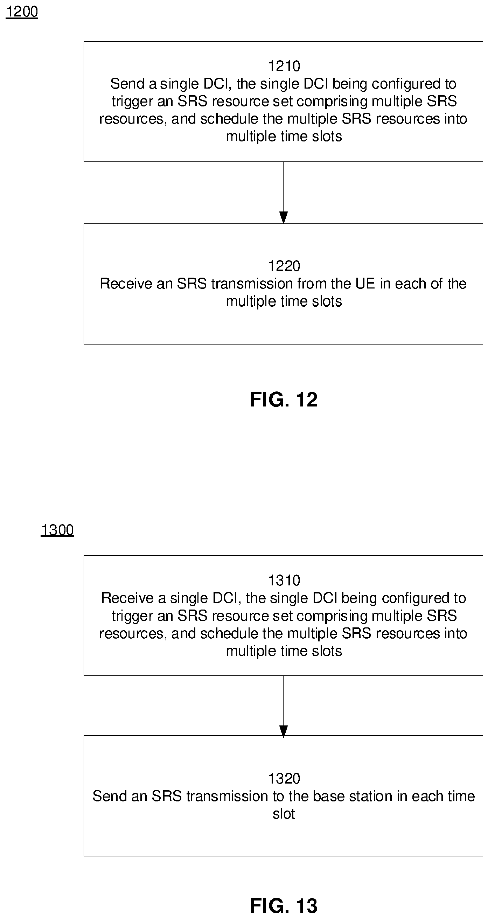

FIG. 12 illustrates an example flowchart of a method 1200 according to an embodiment of the disclosure. Method 1200 may be used to implement an improved cross-slot SRS transmission scheme according to an embodiment of the present disclosure. Method 1200 may be executed at base station 110.

Method 1200 may include step 1210 and step 1220. In step 1210, base station 110 may be configured to send a single DCI to LTE 120. The single DCI may be configured to trigger a SRS resource set including multiple SRS resources, and schedule the multiple SRS resources into multiple time slots. In step 1220, base station 110 may be configured to receive an SRS transmission from UE 120 in each of the multiple time slots.

According to an embodiment of the present disclosure, the multiple SRS resources are scheduled in the multiple time slots, such that UE 120 only uses one of the multiple SRS resources in each of the multiple time slots to perform transmission. For example, one SRS resource that should be used by UE 120 may be allocated for one time slot. Accordingly, in each time slot, UE 120 only uses a transmit beam corresponding to the one SRS resource to send the SRS transmission. Unlike UE 120, base station 110 may be configured to receive, in each time slot, SRS transmissions from UE 120 using multiple receive beams corresponding to all of the SRS resources of the SRS resource set.

The foregoing embodiments are particularly applicable to scenarios where the length of the time slot is relatively short. For example, for 52.6GHz-71GHz, a subcarrier (SCS) with a width of 480kHz or 960kHz may be used. Such a wider subcarrier width facilitates utilization of spectrum resources, but also reduces a duration of an OFDM symbol. Accordingly, the length of each time slot becomes shorter. In this case, if UE 120 is required to perform beam switches frequently in a single time slot, the implementation complexity of the LTE will increase significantly.

In case the subcarrier width is narrow (e.g., 120 kHz) and thus the time slot is wide, more than one SRS resource that should be used by LTE 120 may instead be allocated for each time slot. The more than one SRS resource may be a subset of the SRS resource set described above, or even the SRS resource set itself. In this case, UE 120 may use the more than one SRS resource of the multiple SRS resources to send the SRS transmission in each of the multiple time slots. Accordingly, UE 120 will be able to send SRS transmissions in each time slot using more than one transmit beam corresponding to the more than one SRS resource. In this case, in each time slot, base station 110 may be configured to receive SRS transmissions from UE 120 using multiple receive beams corresponding to all of the SRS resources of the SRS resource set, which is similar to that discussed above.

According to an embodiment of the present disclosure, base station 110 may be configured to determine, based on a width of the currently used subcarrier, whether to restrict UE 120 to use only a single SRS resource in a single time slot to send the SRS transmission. For example, if the width of the subcarriers is wide (480kHz or 960kHz), UE 120 may be restricted to use only a single SRS resource in a single time slot to send SRS transmissions. If the width of the subcarriers is narrow (120kHz), UE 120 may be allowed to send SRS transmissions using more than one SRS resource in a single time slot.

FIG. 13 illustrates an example flowchart of a method 1300 according to an embodiment of the disclosure. Method 1300 may be used to implement an improved cross-slot SRS transmission scheme according to an embodiment of the present disclosure. Method 1300 may be executed at LTE 120.

Method 1300 may include step 1310 and step 1320. In step 1310, UE 120 may be configured to receive a single DCI from base station 110. The single DCI may be configured to trigger an SRS resource set including multiple SRS resources, and the multiple SRS resources are scheduled in multiple time slots. In step 1320, UE 120 may be configured to send an SRS transmission to base station 110 in each of the multiple time slots. UE 120 may complete uplink beam scanning, codebook-based or non-codebook-based transmission, uplink positioning, or switching of transmit antennas of LTE 120, through sending the SRS transmissions.

According to an embodiment of the present disclosure, in each of the multiple time slots, UE 120 may be configured to use only one SRS resource of the multiple SRS resources to send SRS transmissions. This may eliminate the need for LTE 120 to perform any beam switch within a single time slot. For example, this configuration may be applied in the case where the subcarrier width is relatively wide (e.g., 480kHz or 960kHz).

According to other embodiments of the present disclosure, UE 120 may be configured to use more than one SRS resource of the multiple SRS resources to send SRS transmissions in each of the multiple time slots. Accordingly, UE 120 will be able to send SRS transmissions in each time slot using more than one transmit beam corresponding to the more than one SRS resource. This allows LTE 120 to perform a certain number of beam switches within a single time slot. For example, this configuration may be applied in the case where the subcarrier width is relatively narrow (e.g., 120kHz).

According to an embodiment of the present disclosure, a number of SRS resources allocated into a single time slot may be negatively correlated with the width of the subcarrier, and/or be positively correlated with the capability of LTE 120. In other words, in case a wider subcarrier is applied, the number of SRS resources allocated into a single time slot may be less (e.g., only one). In addition, in case UE 120 is less capable, the number of SRS resources allocated into a single time slot may be less (e.g., only one).

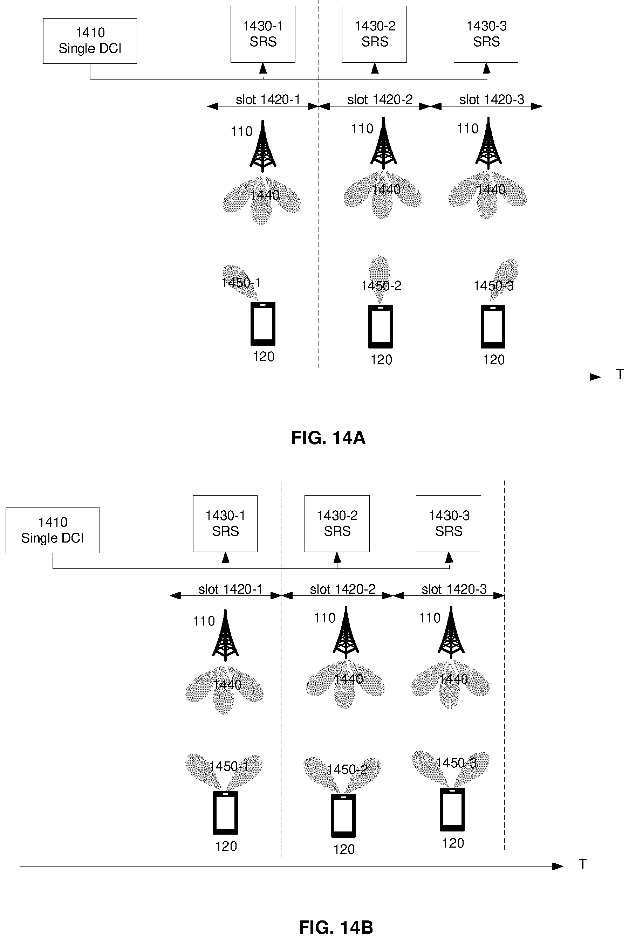

FIG. 14A illustrates an example of an improved cross-slot SRS transmission scheme scheduled by a single DCI according to an embodiment of the present disclosure. In FIG. 14A, a single DCI 1410 may schedule multiple SRS transmissions, for example, SRS transmissions 1430-1, 1430-2, 1430-3. SRS transmissions 1430-1, 1430-2, 1430-3 are scheduled in consecutive time slots 1420-1, 1420-2, 1420-3, respectively. Each of the time slots 1420-1, 1420-2, 1420-3 may be relatively short. In the first time slot 1420-1, base station 140 may be configured to receive SRS transmissions using a set of receive beams 1440, while UE 120 may send SRS transmissions using only a single transmit beam 1450-1. Measurement results associated with the first time slot may be based on the set of receive beams 1440 and the transmit beam 1450-1. In the second time slot 1420-2, base station 140 may be configured to receive SRS transmissions using a set of receive beams 1440, while UE 120 may send SRS transmissions using only a single transmit beam 1450-2. Measurement results associated with the second time slot may be based on the set of receive beams 1440 and the transmit beam 1450-2. In the third time slot 1420-3, base station 140 may be configured to receive SRS transmissions using a set of receive beams 1440, while UE 120 may send SRS transmissions using only a single transmit beam 1450-3. Measurement results associated with the third time slot may be based on the set of receive beams 1440 and the transmit beam 1450-3. In this example, multiple transmit beams of LTE 120 are spread over multiple time slots, thereby avoiding performing any beam switch within any single time slot. In some embodiments, the set of receive beams 1440 used by base station 110 in each of the first time slot 1420-1, the second time slot 1420-2, and the third time slot 1420-2 may be a same set of beams, for example, for use in uplink beam scanning. In other embodiments, the set of receive beams 1440 used by base station 110 in each time slot may vary from one time slot to another, without limitation.

FIG. 14B illustrates another example of an improved cross-slot SRS transmission scheme scheduled by a single DCI according to an embodiment of the present disclosure. In FIG. 14B, a single DCI 1410 may schedule multiple SRS transmissions, for example, SRS transmissions 1430-1, 1430-2, 1430-3. SRS transmissions 1430-1, 1430-2, 1430-3 are scheduled in consecutive time slots 1420-1, 1420-2, 1420-3, respectively. Unlike the example in FIG. 14A, in FIG. 14B, each of the time slots 1420-1, 1420-2, 1420-3 may be relatively long. In the first time slot 1420-1, base station 140 may be configured to receive SRS transmissions using a set of receive beams 1440, while UE 120 may send SRS transmissions using a set of transmit beams 1450-1. In the second time slot 1420-2, base station 140 may be configured to receive SRS transmissions using a set of receive beams 1440, while UE 120 may send SRS transmissions using a set of transmit beams 1450-2. In the third time slot 1420-3, base station 140 may be configured to receive SRS transmissions using a set of receive beams 1440, while UE 120 may send SRS transmissions using a set of transmit beams 1450-3. Each set of transmit beams 1450-1, 1450-2, 1450-3 may correspond to a subset of the SRS resource set scheduled by the single DCI 1410, and the subset may include more than one SRS resource.

According to an embodiment of the present disclosure, base station 110 and UE 120 may be configured to operate in the frequency band of 52.6GHz-71GHz. In the case of the frequency band of 52.6GHz-71GHz, wider subcarrier widths and reduced time slot lengths are expected to be employed. The scheme disclosed in the present disclosure relax the requirement on the capability of beam switching of LTE 120 by spreading multiple transmission beams of LTE 120 into multiple time slots, and thereby reducing the implementation complexity of UE 120. It should be understood that the scheme of the present disclosure is not limited to specific frequency bands. In addition to the frequency band of 52.6GHz-71GHz, the schemes of the present disclosure may also be applied to any suitable frequency band.

### 4. SIGNAL/CHANNEL TRANSMISSION SCHEME TRIGGERED/ACTIVATED BY A COT

In a unlicensed frequency band design of Rel.16, a network-side device (for example, a base station) is responsible for monitoring a channel, and determines a specific time period when the channel is available, as a COT. The network-side device indicates the specific time period to a UE through a COT message in the DCI. Some signal transmissions or channel transmissions between the base station and the UE may fall outside of this specific time period. If this happens, an additional DCI signaling may often be used to reschedule the transmissions that fall outside of the specific time period. This approach introduces additional signaling overhead. The present disclosure provides an improved solution that provides signal/channel transmission triggered/activated by the COT.

### 4.1 Signal/channel transmission scheme triggered by COT

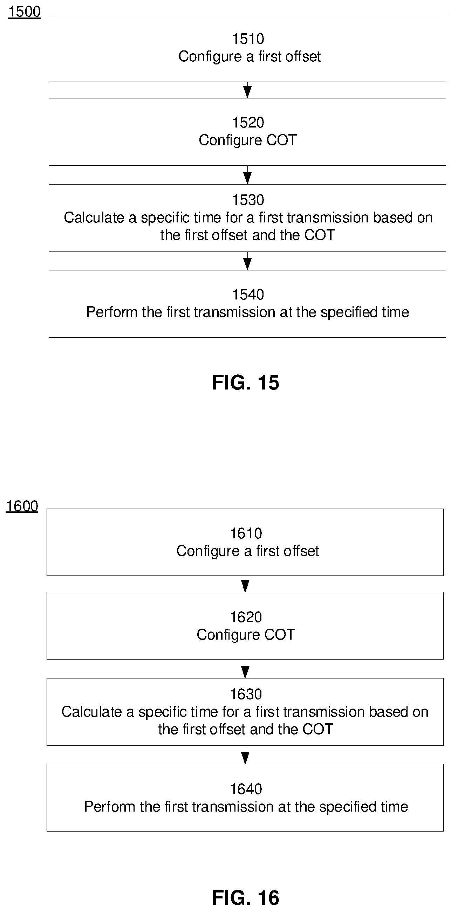

FIG. 15 illustrates an example flowchart of a method 1500 according to an embodiment of the disclosure. Method 1500 may be used to implement a COT-triggered signal/channel transmission scheme according to an embodiment of the present disclosure. Method 1500 may be executed at base station 110. Method 1500 may include step 1510 to step 1540.

In step 1510, base station 110 may be configured to configure a first offset, which may be associated with a first transmission between base station 110 and UE 120. According to an embodiment of the present disclosure, the first transmission may be an uplink transmission or a downlink transmission. Furthermore, the first transmission may be a signal transmission or a channel transmission. The first offset may be associated with an amount of time. The first offset may be expressed in various ways. As an example, the first offset may be described in time units such as nanoseconds, microseconds, milliseconds, or using the number of OFDM symbols. In other examples, the first offset may be described using a percentage.

In step 1520, base station 110 may be configured to configure a COT associated with base station 110 and LTE 120. The COT may indicate a specific time period that base station 110 and UE 120 are allowed to communicate with each other on an unlicensed frequency band. Base station 110 and UE 120 are not allowed to communicate outside the COT. The COT may be included in a COT message to be communicated between base station 110 and UE 120. For example, the COT message may include a start time and a duration of the COT. In some embodiments, the COT message may be generated by base station 110 and sent to LTE 120. The COT message may be sent to LTE 120 through DCI (e.g., DCI_2.0). In other embodiments, base station 110 may receive the COT message from UE 120.

In step 1530, base station 110 may be configured to calculate, based on the COT and the first offset, a specific time for a first transmission. The COT and the first offset may be combined in any predetermined suitable manner to derive the specific time. For example, the specific time may be calculated as a time at which the start time of the COT is shifted forward by the first offset, or the time at which the end time of the COT is shifted backward by the first offset. In case the first offset is a percentage, the specific time may be calculated as the time at which the percentage of a duration of the COT has elapsed since the start time of the COT.

In step 1540, base station 110 may be configured to perform the first transmission at the calculated specific time. In some embodiments, the first transmission may be a downlink transmission, and performing the first transmission by base station 110 means that base station 110 sends the first transmission to LTE 120. In some other embodiments, the first transmission may be an uplink transmission, and performing the first transmission by base station 110 means that base station 110 receives the first transmission from UE 120. It should be understood that the performing of the first transmission does not need to be triggered by additional dynamic signaling, but may be executed automatically when the specific time is reached. As one example, after entering the COT, base station 110 may start a timer, which expires after the first offset. Base station 110 may perform the first transmission upon expiration of the timer.

According to an embodiment of the present disclosure, before performing the first transmission, base station 110 may further determine whether the calculated specific time is within the specific time period as indicated by the COT. In response to a determination that the calculated specific time is within the specific time period indicated by the COT, base station 110 may be configured to perform the first transmission at the specific time. In response to a determination that the calculated specific time is outside the specific time period (e.g., when the first offset is greater than the duration of the COT), base station 110 may be configured to give up performing the first transmission.

According to an embodiment of the present disclosure, the first offset may be configured in various suitable ways. For example, the first offset may be configured through an RRC signaling, the COT message, or a combination thereof.

In some embodiments, the first offset may be configured through an RRC signaling. For example, base station 110 may be configured to configure information associated with the first offset in the RRC signaling, and send the RRC signaling to UE 120. The information associated with the first offset in the RRC signaling may be the first offset itself. Since the RRC signaling is a higher layer signaling, the first offset in this configuration mode has lower dynamics. In this case, if the information associated with the first offset is not reconfigured through a new RRC signaling, multiple COTs associated with base station 110 and UE 120 may be associated with the same first offset.

In some other embodiments, the first offset may be configured through the COT message. For example, the first offset may be included along with the COT in the COT message, so as to be communicated between base station 110 and UE 120. In this case, each COT associated with base station 110 and UE 120 will have a value of the first offset that is specific to that COT. The value of the first offset is configured through the COT message indicating the COT. The first offsets associated with different COTs may be different or may be the same. In some embodiments, since the COT message may be sent through DCI, the first offset in this configuration mode have higher dynamics.

In yet another embodiment, the first offset may be configured based on both of the RRC signaling and the COT message. For example, base station 110 may configure a list, which includes multiple optional offsets, in the RRC signaling. Also, the COT message may be used to configure an offset index. A particular optional offset that corresponds to the offset index in the list of optional offsets may be configured as the first offset. The configuration of the list of optional offsets has lower dynamics, while the configuration of the offset index may have higher dynamics.

According to an embodiment of the present disclosure, a size of the first offset may be configured based on a priority of LTE 120. For multiple LTEs 120 with different priorities, different first offsets may be configured. For a LTE 120 with a high priority, a small first offset may be configured, so that base station 110 and UE 120 may perform the first transmission as soon as possible after they enter the COT. For a LTE 120 with a low priority, a large first offset may be configured, so that the first transmission between base station 110 and UE 120 may be performed at a later time in the COT, or performed in a next COT, or not performed.

Optionally, the COT message may also include an indication as to whether to trigger the first transmission. If the COT message indicates that the first transmission is not to be triggered, base station 110 may give up performing the first transmission. Otherwise, base station 110 may perform the first transmission at the calculated specific time.

In some embodiments, the COT message may be generated by base station 110. In these embodiments, base station 110 may be configured to perform a Listen Before Talk (LBT) operation to determine the specific time period during which base station 110 and UE 120 are allowed to communicate with each other on the unlicensed frequency band, that is, the COT associated with base station 110 and UE 120. For example, base station 110 may be configured to detect energy of a channel on the unlicensed frequency band, and determine the time period when the energy of the channel is lower than a threshold, as the COT in which base station 110 and UE 120 are allowed to communicate. Base station 110 may include the determined COT in the COT message, and send the COT message to UE 120 through DCI. Optionally, as mentioned above, base station 110 may also include information associated with the first offset in the generated COT message.

In those embodiments, the first transmission may include various types of downlink transmissions. In some examples, the first transmission may be a Downlink Reference Signal (DL RS) transmission. DL RS transmission triggered by the COT may be used to perform channel measurement. One or more of existing periodic CSI-RS transmissions may fall outside the COT, resulting in missing channel measurements. DL RS transmission triggered by COT may replace or be used in conjunction with the periodic CSI-RS transmissions to compensate for the missing channel measurements. In other examples, the first transmission may be a PDSCH transmission. The PDSCH transmission triggered by COT may be used to transmit downlink user data. Existing Semi-Persistent PDSCH (SP PDSCH) transmissions are periodic, and one or more of the transmissions may fall outside the COT and cannot be performed. The PDSCH transmission triggered by COT may replace or be used in conjunction with the Semi-Persistent PDSCH transmissions, so as to ensure reliability of PDSCH transmissions.

In some other embodiments, base station 110 may receive the COT message from LTE 120. The COT message may include the COT that is determined by LTE 120 based on the LBT operation. Optionally, the COT message may also include information associated with the first offset. In this case, base station 110 may extract the information associated with the first offset from the COT message, and accordingly configure the first offset to be used by base station 110 based on the information.

In those embodiments, the first transmission may include various types of uplink transmissions. In some examples, the first transmission may include an Uplink Reference Signal (UL RS) transmission. The UL RS transmission triggered by the COT may replace or be used in conjunction with existing periodic uplink reference signal transmission. In some other examples, the first transmission may include a PUSCH transmission. The PUSCH transmission triggered by COT may replace or be used in conjunction with existing Semi-Persistent PUSCH (SP PUSCH) transmission. In some other examples, the first transmission may also include PUCCH transmission. The PUCCH transmission triggered by the COT may replace or be used in conjunction with existing Semi-Persistent PUCCH (SP PUCCH) transmission.

FIG. 16 illustrates an example flowchart of a method 1600 according to an embodiment of the disclosure. Method 1600 may be used to implement a COT-triggered signal/channel transmission scheme according to an embodiment of the present disclosure. Method 1600 may be executed at UE 120. The method 1600 may include step 1610 to step 1640.

In step 1610, UE 120 may be configured to configure a first offset, which may be associated with a first transmission between base station 110 and UE 120. As described above, the first transmission may be an uplink transmission, for example, a UL RS transmission, a PUCCH transmission, a PUSCH transmission, and so on. Alternatively, the first transmission may be a downlink transmission, for example, a DL RS transmission, a PDSCH transmission, and so on. The first transmission may be a signal transmission, for example, a UL RS transmission, a DL RS transmission, and so on. Alternatively, the first transmission may be a channel transmission, for example, a PUCCH transmission, a PUSCH transmission, a PDSCH transmission, and so on.

In step 1620, UE 120 may be configured to configure a COT associated with the base station and LTE 120. The COT may indicate a specific time period during which base station 110 and UE 120 are allowed to communicate with each other on an unlicensed frequency band. Base station 110 and UE 120 are not allowed to communicate outside the COT. The COT may be included in a COT message to be communicated between base station 110 and UE 120. In some embodiments, UE 120 may receive the COT message from base station 110. In some other embodiments, UE 120 may generate the COT message and send it to base station 110.

In step 1630, UE 120 may be configured to calculate, based on the COT and the first offset, a specific time for the first transmission. The COT and the first offset may be combined in any predetermined suitable manner to derive the specific time. For example, the specific time may be calculated as a sum of the start time of the COT and the first offset, or a difference between the end time of the COT and the first offset. In case the first offset is a percentage, the specific time may be calculated as the time at which this certain percentage of a duration of the COT has elapsed since the start time of the COT.

In step 1640, UE 120 may be configured to perform the first transmission at the calculated specific time. If the first transmission may be a downlink transmission, UE 120 may be configured to receive the first transmission from base station 110 at the calculated specific time. If the first transmission may be an uplink transmission, UE 120 may be configured to send the first transmission to base station 110 at the calculated specific time. The execution of the first transmission does not need to be triggered by an additional dynamic signaling, but may be executed automatically when the specific time is reached.

According to an embodiment of the present disclosure, before performing the first transmission, UE 120 may further determine whether the calculated specific time is within the specific time period as indicated by the COT. In response to a determination that the calculated specific time is within the specific time period indicated by the COT, UE 120 may be configured to perform the first transmission at the specific time. Otherwise, UE 120 may be configured to give up performing the first transmission.

As described above in detail with reference to the method 1500, the first offset may be configured in various suitable ways, as long as UE 120 and base station 110 agree on the first offset associated with each COT. As a non-limiting example, UE 120 may configure the first offset through an RRC signaling, a COT message, or a combination thereof.

In some embodiments, UE 120 may be configured to configure the first offset based at least in part on an RRC signaling received from base station 110. Specifically, UE 120 may obtain information associated with the first offset by parsing the RRC signaling from base station 110, and configure the first offset to be used by LTE 120 based on the information associated with the first offset.

In some other embodiments, UE 120 may be configured to configure the first offset at least in part using a COT message. For example, UE 120 may obtain information associated with the first offset by parsing the COT message from base station 110, and configure the first offset to be used by UE 120 based on the information associated with the first offset. Alternatively, if the COT message is generated by LTE 120, UE 120 may also include the first offset in the COT message and send it to base station 110.

In still other embodiments, UE 120 may configure the first offset based on both of the RRC signaling and the COT message. Specifically, UE 120 may be configured to extract a list of optional offsets from the RRC signaling, configure the offset index using the COT message, and configure the optional offset corresponding to the offset index in the list of optional offsets, as the first offset to be used by LTE 120.

According to an embodiment of the present disclosure, a size of the first offset may be configured based on priority of LTE 120. LTEs 120 with different priorities may be configured with different first offsets. A LTE 120 with a high priority may be configured with a small first offset. A LTE 120 with a low priority may be configured with a large first offset. The priority of LTE 120 may depend on a type of UE 120 or a type of traffic UE 120 is performing. For example, UE 120 associated with life support or security alerts, or UE 120 performing emergency calls may be assigned the highest priority. A LTE 120 that is a media streaming device or a LTE 120 that is performing a normal call may be assigned a medium priority. Certain MTC devices or LTE 120 that only perform periodic update or background handshaking traffic may be assigned a low priority.

According to an embodiment of the present disclosure, the COT message communicated between base station 110 and UE 120 may also optionally include an indication as to whether to trigger the first transmission. If the COT message indicates that the first transmission is not to be triggered, UE 120 may give up performing the first transmission. Otherwise, UE 120 may perform the first transmission at the calculated specific time.

In some embodiments, UE 120 may receive the COT message from base station 110. The COT message may include the COT determined by base station 110 based on the LBT operation. Optionally, the COT message may also include information associated with the first offset. In this case, UE 120 may extract information associated with the first offset from the COT message and configure the first offset to be used by UE 120 accordingly. In these embodiments, the first transmission may include various types of downlink transmissions, for example, DL RS transmissions, PDSCH transmissions, etc. as described above.

In some other embodiments, the COT message may be generated by LTE 120. In these embodiments, UE 120 may be configured to perform LBT operations to determine the specific time period during which base station 110 and UE 120 are allowed to communicate with each other on the unlicensed frequency band, i.e., the COT associated with base station 110 and UE 120. For example, UE 120 may be configured to detect energy of a channel on the unlicensed frequency band, and determine a time period in which the energy of the channel is lower than a threshold, as the COT in which base station 110 and UE 120 are allowed to communicate. UE 120 may include the determined COT in the COT message and send the COT message to base station 110. If the LBT performed by LTE 120 is directional (that is, UE 120 completes the LBT using a receiver that has a beam in a specific direction), the COT message may be a directional COT message, and the directional COT message may include information associated with the specific direction. That is, a directional LBT leads to a directional COT message. Optionally, as mentioned above, UE 120 may also include information associated with the first offset in the generated COT message. In these embodiments, the first transmission may include various types of uplink transmissions, for example, UL RS transmissions, PUSCH transmissions, PUCCH transmissions, etc. as described above.

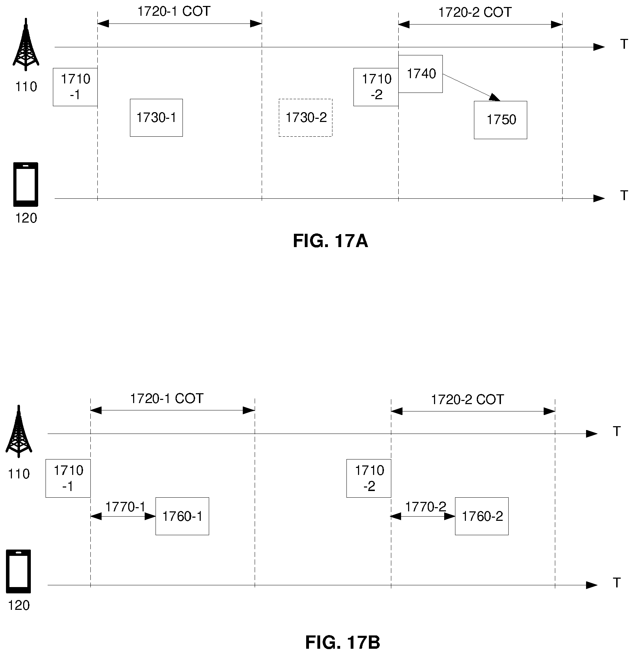

FIG. 17A illustrates an example of a transmission associated with a COT. In this example, base station 110 triggers respective COT 1720-1 and COT 1720-2 through COT messages 1710-1 and 1710-2, respectively. Base station 110 and UE 120 desire to perform periodic transmissions 1730. The periodic transmissions 1730 here may be, for example, periodic CSI-RS transmissions, semi-persistent PDSCH transmissions, periodic uplink RS transmissions, semi-persistent PUSCH transmissions, or semi-persistent PUCCH transmissions. As shown, the first transmission 1730-1 of the periodic transmissions 1730 is located within the COT 1720-1, so transmission 1730-1 can be performed. The second transmission 1730-2 of the periodic transmissions 1730 is not located in any COT and therefore cannot be performed. In order to compensate for the second transmission 1730-2 that are not performed, base station 110 needs to dynamically trigger a transmission 1750 through an additional DCI 1740.

As a more specific example, periodic transmissions 1730 may be, for example, periodic CSI-RS transmissions. During beam failure recovery in a high frequency band, UE 120 relies on the periodic CSI-RS transmissions to monitor beam quality of a channel. However, if located outside the COT, neither a periodic beam failure monitoring signal nor a new beam discovery signal can be sent out from base station 110, and UE 120 cannot monitor the channel quality in real time. Therefore, base station 110 needs to dynamically trigger an aperiodic CSI-RS transmission 1750 through an additional DCI 1740, so as to make up for the previously missed periodic CSI-RS transmission 1730-2. The triggered aperiodic CSI-RS transmission 1750 needs to use the same QCL-Type D assumption as the missed periodic CSI-RS transmission 1730-2.

FIG. 17B illustrates an example of a COT-triggered signal/channel transmission scheme according to an embodiment of the present disclosure. The respective COT 1720-1 and COT 1720-2 are triggered by COT messages 1710-1 and 1710-2, respectively. These COT messages may be sent by base station 110 to UE 120, or be sent by the LTE to base station 110. For each of COT 1720-1 or COT 1720-2, after a first offset 1770-1 or 1770-2 from the start time of that COT, a respective first transmission 1760-1 or 1760-2 is automatically performed. That is, the first transmission 1760-1 or 1760-2 is triggered by COT 1720-1 or COT 1720-2, respectively, without being dynamically triggered by an additional DCI (e.g., DCI 1740 in FIG. 17A). As discussed above, base station 110 and UE 120 may configure the first offset 1770-1 and the second offset 1770-2 through the RRC signaling (not shown), the COT message 1710, or a combination thereof. The configured first offset 1770-1 and second offset 1770-2 may be the same or may be different. Compared with the example of FIG. 17A, the example of FIG. 17B avoids the additional DCI 1740, thereby saving overhead.

It should be understood that although the periodic transmissions 1730 in FIG. 17A are not shown in FIG. 17B, the periodic transmissions 1730 may optionally be retained in FIG. 17B. For example, the first transmission 1760 of FIG. 17B may be used in combination with the periodic transmissions 1730 of FIG. 17A. In such an example, the first transmission 1760-1 may not be performed in the COT 1720-1, since the periodic transmission 1730-1 may be normally performed in the COT 1720-1. Since the periodic transmission 1730-2 (which is not located within any COT) cannot be performed, it may be indicated through the COT message 1710-2 that the first transmission 1760-2 should be performed in the COT 1710-2 to compensate for the missing periodic transmission 1730-2. In this case, COT message 1710-2 may contain an indication that the first transmission should be performed, while COT message 1710-1 may not contain an indication that the first transmission should be performed. The first transmission 1760-2 may be in a same or a similar configuration as the corresponding missing periodic transmission 1730-2. For example, if periodic transmission 1730-2 is a CSI-RS transmission, first transmission 1760-2 may be a DL RS transmission and employ a same QCL-Type D assumption as periodic transmission 1730-2.

### 4.2 Signal/channel transmission scheme activated by COT

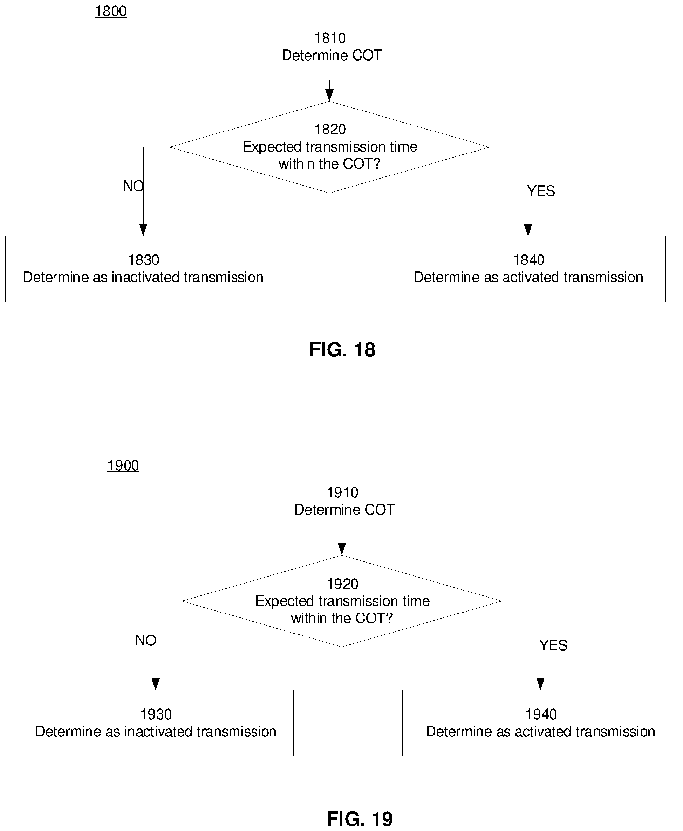

FIG. 18 illustrates an example flowchart of a method 1800 according to an embodiment of the disclosure. Method 1800 may be used to implement a COT-activated signal/channel transmission scheme according to an embodiment of the present disclosure. Method 1800 may be executed at base station 110. Method 1800 may include step 1810 to step 1840.

In step 1810, base station 110 may be configured to determine a COT associated with base station 110 and UE 120. As previously discussed, the COT may indicate a specific time period during which base station 110 and UE 120 are allowed to communicate with each other on an unlicensed frequency band. Base station 110 and UE 120 are not allowed to communicate outside the COT. The COT may be included in a COT message to be communicated between base station 110 and UE 120. For example, the COT message may include a start time and a duration of the COT. In some embodiments, the COT message may be generated by base station 110 and sent to UE 120. The COT message may be sent to LTE 120 through DCI (e.g., DCI_2.0). In some other embodiments, base station 110 may receive the COT message from UE 120.

In step 1820, base station 110 may be configured to determine whether an expected transmission time for a specific transmission of periodic transmissions with UE 120 is within the COT. A time interval between every two adjacent transmissions of the periodic transmissions is a pre-configured fixed interval. Therefore, the expected transmission time for each transmission may be determined based on the first transmission/previous transmission and the fixed interval. Whether the expected transmission time is within the COT may be determined based on a comparison of the expected transmission time that is determined for a specific transmission and the COT. In some embodiments, the periodic transmissions between base station 110 and UE 120 may be downlink transmissions, including but not limited to downlink Semi-Persistent Reference Signal (SP RS) transmissions, Semi-Persistent Scheduling physical downlink shared channel (SPS PDSCH) transmissions, and so on. In some embodiments, the periodic transmissions between base station 110 and UE 120 may be uplink transmissions, including but not limited to uplink Semi-Persistent Sounding Reference Signal (SP SRS) transmissions, or Configured Grant physical uplink shared channel (CG PUSCH) transmissions.

In response to a determination in step 1820 that the expected transmission time for the specific transmission is not within the COT, method 1800 may proceed to step 1830. In step 1830, base station 110 may be configured to determine the specific transmission as a deactivated transmission. In response to a determination in step 1820 that the expected transmission time for the specific transmission is within the COT, method 1800 may proceed to step 1840. In step 1840, base station 110 may be configured to determine the specific transmission as an activated transmission.

In some embodiments, the COT message may be generated by base station 110. In these embodiments, base station 110 may be configured to perform an LBT operation, and to determine, based on the LBT operation, the specific time period during which base station 110 and UE 120 are allowed to communicate with each other on the unlicensed frequency band, that is, the COT associated with base station 110 and UE 120. For example, base station 110 may be configured to detect energy of a channel on the unlicensed frequency band, and determine a time period in which the energy of the channel is lower than a threshold, as the COT in which base station 110 and UE 120 are allowed to communicate. Base station 110 may include the determined COT in the COT message, and send the COT message to LTE 120 through DCI (e.g., DCI_2.0). In these embodiments, examples of periodic transmissions may include various types of downlink periodic transmissions, for example, downlink SP RS transmissions or SPS PDSCH transmissions.

In some other embodiments, base station 110 may receive the COT message from LTE 120 and determine the COT based on the COT message from UE 120. The COT message may include the COT that is determined by LTE 120 based on an LBT operation. In these embodiments, examples of periodic transmissions may include various types of uplink periodic transmissions, for example, uplink SP SRS transmissions or CG PUSCH transmissions.

According to an embodiment of the present disclosure, base station 110 may optionally be configured to perform the specific transmission that is determined to be activated, but not to perform the specific transmission that is determined to be deactivated. In an embodiment where the periodic transmissions are downlink transmissions, base station 110 performing the specific transmission may include base station 110 sending the specific transmission to UE 120. In an embodiment where the periodic transmissions are uplink transmissions, base station 110 performing the specific transmission may include base station 110 receiving the specific transmission from UE 120.

According to an embodiment of the present disclosure, base station 110 may be configured to execute method 1800 for each of the periodic transmissions until the execution of the periodic transmissions is completed.

FIG. 19 illustrates an example flowchart of a method 1900 according to an embodiment of the disclosure. Method 1900 may be used to implement a COT-activated signal/channel transmission scheme according to an embodiment of the present disclosure. Method 1900 may be executed at LTE 120. Method 1900 may include step 1910 to step 1940.

In step 1910, UE 120 may be configured to determine a COT associated with base station 110 and UE 120. As previously discussed, the COT may indicate a specific time period during which base station 110 and UE 120 are allowed to communicate with each other on an unlicensed frequency band. The COT may be included in a COT message to be communicated between base station 110 and UE 120. In some embodiments, UE 120 may receive a COT message from base station 110. In some other embodiments, UE 120 may generate a COT message and send it to base station 110.

In step 1920, UE 120 may be configured to determine whether an expected transmission time for a specific transmission of the periodic transmissions with base station 110 is within the COT. For example, the expected transmission time for each transmission may be determined based on a first/previous transmission and a fixed interval between periodic transmissions. Whether the expected transmission time is within the COT may be determined based on a comparison of the expected transmission time determined the a specific transmission with the COT.

In response to a determination in step 1920 that the expected transmission time for the specific transmission is not within the COT, method 1900 may proceed to step 1930. In step 1930, LTE 120 may be configured to determine the specific transmission as a deactivated transmission. In response to a determination in step 1920 that the expected transmission time for the specific transmission is within the COT, method 1900 may proceed to step 1940. In step 1940, UE 120 may be configured to determine the specific transmission as an activated transmission.

In some embodiments, UE 120 may receive a COT message from base station 110 and determine the COT based on the COT message from base station 110. In these embodiments, base station 110 may be configured to perform an LBT operation, and to determine, based on the LBT operation, a specific time period during which base station 110 and UE 120 are allowed to communicate with each other on the unlicensed frequency band, that is, the COT associated with base station 110 and UE 120. In these embodiments, examples of periodic transmissions may include various types of downlink periodic transmissions, for example, downlink SP RS transmissions or SPS PDSCH transmissions.

In some other embodiments, UE 120 may be configured to perform a Listen Before Talk (LBT) operation and determine the COT based on the LBT operation. If the LBT performed by LTE 120 is directional (that is, UE 120 completes LBT using a receiver that has a beam in a specific direction), the COT message may be a directional COT message, and the directional COT message may include information associated with the specific direction. That is, a directional LBT leads to a directional COT message. In these embodiments, examples of periodic transmissions may include various types of uplink periodic transmissions, for example, uplink SP SRS transmissions or CG PUSCH transmissions.

According to an embodiment of the present disclosure, UE 120 may optionally be configured to perform the specific transmission that is determined to be activated, but not to perform the specific transmission that is determined to be deactivated. In an embodiment where the periodic transmissions are downlink transmissions, UE 120 performing the specific transmission may include LTE 120 receiving the specific transmission from base station 110. In an embodiment where the periodic transmissions are uplink transmissions, UE 120 performing the specific transmission may include LTE 120 sending the specific transmission to base station 110.

According to an embodiment of the present disclosure, UE 120 may be configured to execute method 1900 for each of the periodic transmissions until the execution of the periodic transmissions is completed.

In the COT-activated signal/channel transmission scheme according to an embodiment of the present disclosure, base station 110 and UE 120 may consistently determine whether each of the periodic transmissions is activated or deactivated. Additional transmissions may not need to be scheduled through an additional signaling to compensate for transmissions outside the COT.

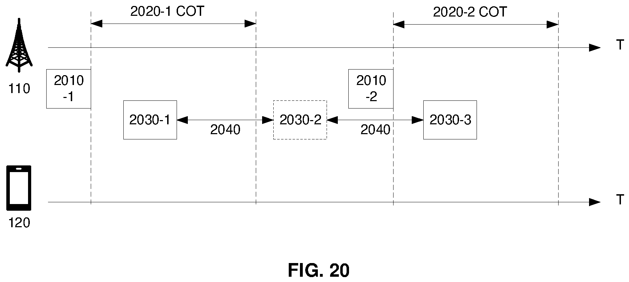

FIG. 20 illustrates an example of a COT-activated signal/channel transmission scheme according to an embodiment of the present disclosure. Respective COT 2020-1 and COT 2020-2 are triggered by COT messages 2010-1 and 2010-2 respectively. These COT messages may be sent by base station 110 to LTE 120, or may be sent by the UE to base station 110. For a set of periodic transmissions 2030, a time interval 2040 between every two adjacent transmissions may be fixed. For a first transmission 2030-1 of the periodic transmissions 2030, it may be determined that an expected transmission time of the first transmission 2030-1 is within the COT 2020-1, so base station 110 and UE 120 may determine the first transmission 2030-1 as activated. For a second transmission 2030-2 of the periodic transmissions 2030, it may be determined that an expected transmission time of the second transmission 2030-2 is not within any of the COT 2020-1, COT 2020-2, or any other COT, so base station 110 and UE 120 may determine the second transmission 2030-2 as deactivated. For a third transmission 2030-3 of the periodic transmissions 2030, it may be determined that an expected transmission time of the third transmission 2030-3 is within the COT 2020-2, so base station 110 and UE 120 may determine the third transmission 2030-3 as activated. Base station 110 and UE 120 may be configured to perform the activated first transmission 2030-1 and third transmission 2030-3, and not perform the deactivated second transmission 2030-2. Accordingly, the second transmission 2030-2 is drawn with a dashed line in the figure.

It should be understood that although FIG. 20 illustrates two COTs and periodic transmissions 2030 including three transmissions, more or fewer COTs may be included and periodic transmissions 2030 may include more or fewer transmissions in other embodiments without limitations.

### 5. APPLICATION EXAMPLES

The technology of the present disclosure may be applied to various products.

For example, a control-side electronic device according to an embodiment of the present disclosure may be implemented as or included in various control devices/base stations. For example, a transmitting device and a terminal device according to an embodiment of the present disclosure may be implemented as or included in various terminal devices.

For example, the control device/base station mentioned in the present disclosure may be implemented as any type of base station, for example eNB, such as macro eNB and small eNB. A small eNB may be an eNB that covers a cell smaller than a macro cell, such as a pico eNB, a micro eNB, and a home (femto) eNB. For another example, it may be implemented as a gNB, such as a macro gNB and a small gNB. A small gNB may be a gNB covering a cell smaller than a macro cell, such as a pico gNB, a micro gNB, and a home (femto) gNB. Alternatively, the base station may be implemented as any other type of base station, such as NodeB and Base Transceiver Station (BTS). The base station may include: a main body (also referred to as a base station device) configured to control radio communication; and one or more Remote Radio Heads (RRHs) disposed at a different location from the main body. In addition, various types of terminals to be described below may each operate as a base station by performing base station functions temporarily or semi-persistently.

For example, the terminal devices mentioned in the present disclosure may be implemented as mobile terminals (such as smart phones, tablet personal computers (PCs), notebook PCs, portable game terminals, portable/dongle-type mobile routers and digital cameras) or vehicle-mounted terminals (such as vehicle navigation devices) in some embodiments. The terminal device may also be implemented as a terminal performing machine-to-machine (M2M) communication (also referred to as a machine type communication (MTC) terminal). In addition, the terminal device may be a radio communication module (such as an integrated circuit module including a single wafer) mounted on each of the above terminals.

Application examples according to the present disclosure will be described below with reference to the drawings.

### Examples for base stations

It should be understood that the term base station in the present disclosure has the full breadth of its ordinary meaning, and includes at least a radio communication station used as portion of a wireless communication system or radio system to facilitate communication. Examples of the base station may be, for example but not limited to, the following: the base station may be either or both of a base transceiver station (BTS) and a base station controller (BSC) in the GSM system, and may be either or both of a radio network controller (RNC) or Node B in the WCDMA system, may be eNB in the LTE and LTE-Advanced system, or may be corresponding network nodes in future communication systems (e.g., the gNB that may appear in the 5G communication systems, eLTE eNB, etc.). Some of the functions in the base station of the present disclosure may also be implemented as an entity having a control function for communication in the scenario of a D2D, M2M, V2V and V2X communication, or as an entity that plays a spectrum coordination role in the scenario of a cognitive radio communication.

### First example

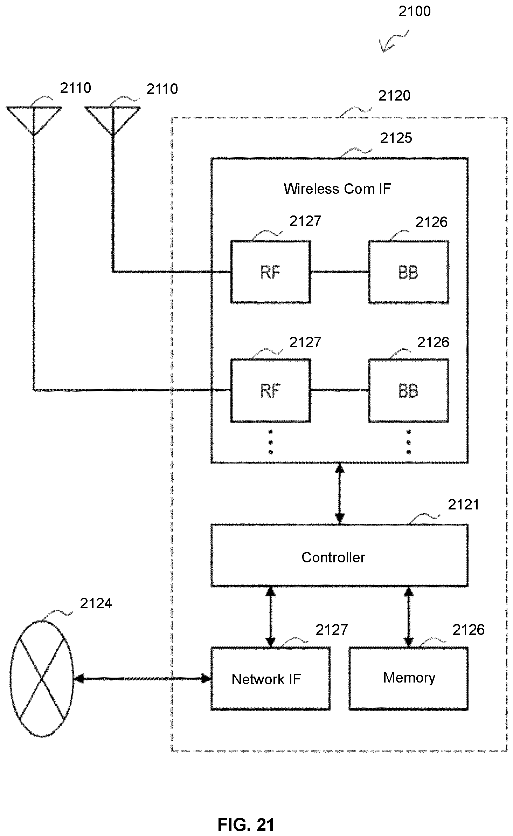

FIG. 21 is a block diagram showing a first example of a schematic configuration of a gNB to which the technology of the present disclosure may be applied. The gNB 2100 includes multiple antennas 2110 and a base station device 2120. The base station device 2120 and each antenna 2110 may be connected to each other via an RF cable. In one implementation, the gNB 2100 (or the base station device 2120) here may correspond to the above electronic device on the control side.

Each of the antennas 2110 includes a single or multiple antenna elements (such as multiple antenna elements included in a Multiple Input Multiple Output (MIMO) antenna), and is used for the base station device 2120 to send and receive wireless signals. As shown in FIG. 21, gNB 2100 may include multiple antennas 2110. For example, multiple antennas 2110 may be compatible with multiple frequency bands used by gNB 2100.

The base station device 2120 includes a controller 2121, a memory 2122, a network interface 2117 and a wireless communication interface 2125.

The controller 2121 may be, for example, a CPU or a DSP, and operates various functions of a higher layers of the base station device 2120. For example, the controller 2121 determines location information of a target terminal device in the at least one terminal devices according to the positioning information of at least one terminal device on the terminal side in the wireless communication system and a specific location configuration information of the at least one terminal device acquired by the wireless communication interface 2125. The controller 2121 may have a logical function to perform control such as radio resource control, radio bearer control, mobility management, access control and scheduling. This control may be performed in conjunction with nearby gNBs or core network nodes. The memory 2122 includes RAM and ROM, and stores programs executed by the controller 2121 and various types of control data (such as a terminal list, transmission power data, and scheduling data).

The network interface 2123 is a communication interface for connecting the base station device 2120 to the core network 2124. The controller 2121 may communicate with the core network node or another gNB via the network interface 2117. In this case, the gNB 2100 and the core network node or other gNB may be connected to each other through logical interfaces such as S1 interface and X2 interface. The network interface 2123 may also be a wired communication interface or a wireless communication interface for wireless backhaul. If the network interface 2123 is a wireless communication interface, the network interface 2123 may use a higher frequency band for wireless communication than the frequency band used by the wireless communication interface 2125.

The wireless communication interface 2125 supports any cellular communication scheme such as Long Term Evolution (LTE) and LTE-Advanced, and provides a wireless connection to terminals located in a cell of the gNB 2100 via the antenna 2110. The wireless communication interface 2125 may generally include, for example, a baseband (BB) processor 2126 and an RF circuit 2127. The BB processor 2126 may perform, for example, encoding/decoding, modulation/demodulation, and multiplexing/demultiplexing, and perform various types of signal processing for layers (such as L1, Medium Access Control (MAC), Radio Link Control (RLC), and Packet Data Convergence Protocol (PDCP)). Instead of the controller 2121, the BB processor 2126 may have a part or all of the logic functions described above. The BB processor 2126 may be a memory storing a communication control program, or a module including a processor configured to execute a program and related circuits. The update program may cause the function of the BB processor 2126 to change. The module may be a card or a blade inserted into a slot of the base station device 2120. Alternatively, the module may also be a chip mounted on a card or blade. Meanwhile, the RF circuit 2127 may include, for example, a mixer, a filter, and an amplifier, and transmit and receive wireless signals via the antenna 2110. Although FIG. 21 illustrates an example in which one RF circuit 2127 is connected to one antenna 2110, the present disclosure is not limited to this illustration, instead one RF circuit 2127 may be connected to multiple antennas 2110 at the same time.

As shown in FIG. 21, the wireless communication interface 2125 may include multiple BB processors 2126. For example, multiple BB processors 2126 may be compatible with multiple frequency bands used by gNB 2100. As shown in FIG. 21, the wireless communication interface 2125 may include multiple RF circuits 2127. For example, the multiple RF circuits 2127 may be compatible with multiple antenna elements. Although FIG. 21 illustrates an example in which the wireless communication interface 2125 includes multiple BB processors 2126 and multiple RF circuits 2127, the wireless communication interface 2125 may also include a single BB processor 2126 or a single RF circuit 2127.

### Second example

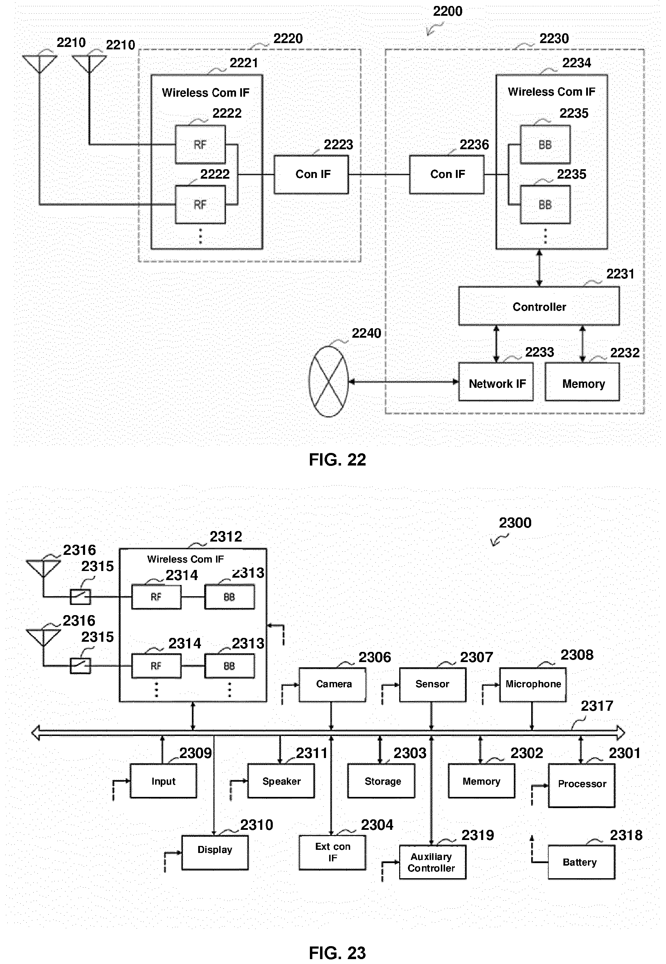

FIG. 22 is a block diagram showing a second example of a schematic configuration of a gNB to which the technology of the present disclosure may be applied. The gNB 2200 includes multiple antennas 2210, RRH 2220 and base station device 2230. The RRH 2220 and each antenna 2210 may be connected to each other via an RF cable. The base station device 2230 and the RRH 2220 may be connected to each other via a high-speed line such as an optical fiber cable. In one implementation, the gNB 2200 (or the base station device 2230) here may correspond to the above electronic device on the control side.

Each of the antennas 2210 includes a single or multiple antenna elements (such as multiple antenna elements included in a MIMO antenna), and is used for the RRH 2220 to send and receive wireless signals. As shown in FIG. 22, the gNB 2200 may include multiple antennas 2210. For example, the multiple antennas 2210 may be compatible with multiple frequency bands used by the gNB 2200.

The base station device 2230 includes a controller 2231, a memory 2232, a network interface 2233, a wireless communication interface 2234 and a connection interface 2236. The controller 2231, the memory 2232, and the network interface 2233 are the same as the controller 1521, the memory 1522, and the network interface 1523 described with reference to FIG. 15.

The wireless communication interface 2234 supports any cellular communication scheme (such as LTE and LTE-Advanced), and provides wireless communication to terminals located in a sector corresponding to the RRH 2220 via the RRH 2220 and the antenna 2210. The wireless communication interface 2234 may generally include, for example, a BB processor 2235. The BB processor 2235 is the same as the BB processor 1526 described with reference to FIG. 15 except that the BB processor 2235 is connected to the RF circuit 2222 of the RRH 2220 via the connection interface 2236. As shown in FIG. 22, the wireless communication interface 2234 may include multiple BB processors 2235. For example, the multiple BB processors 2235 may be compatible with multiple frequency bands used by the gNB 2200. Although FIG. 22 illustrates an example in which the wireless communication interface 2234 includes multiple BB processors 2235, the wireless communication interface 2234 may also include a single BB processor 2235.

The connection interface 2236 is an interface for connecting the base station device 2230 (wireless communication interface 2234) to the RRH 2220. The connection interface 2236 may also be a communication module for communication in the above high-speed line connecting the base station device 2230 (wireless communication interface 2234) to the RRH 2220.

The RRH 2220 includes a connection interface 2223 and a wireless communication interface 2221.

The connection interface 2223 is an interface for connecting the RRH 2220 (wireless communication interface 2221) to the base station device 2230. The connection interface 2223 may also be a communication module used for communication in the above high-speed line.

The wireless communication interface 2221 transmits and receives wireless signals via the antenna 2210. Wireless communication interface 2221 may generally include RF circuitry 2222, for example. The RF circuit 2222 may include, for example, a mixer, a filter, and an amplifier, and transmits and receives wireless signals via the antenna 2210. Although FIG. 22 illustrates an example in which one RF circuit 2222 is connected to one antenna 2210, the present disclosure is not limited to this illustration, instead one RF circuit 2222 may be connected to multiple antennas 2210 at the same time.

As shown in FIG. 22, the wireless communication interface 2221 may include multiple RF circuits 2222. For example, the multiple RF circuits 2222 may support multiple antenna elements. Although FIG. 22 illustrates an example in which the wireless communication interface 2221 includes multiple RF circuits 2222, the wireless communication interface 2221 may also include a single RF circuit 2222.

### Examples of user device/terminal device

### First example

FIG. 23 is a block diagram showing an example of a schematic configuration of a communication device 2300 (e.g., a smart phone, a communicator, etc.) to which the techniques of the present disclosure may be applied. The communication device 2300 includes a processor 2301, a memory 2302, a storage apparatus 2303, an external connection interface 2304, a camera apparatus 2306, a sensor 2307, a microphone 2308, an input apparatus 2309, a display apparatus 2310, a speaker 2311, a wireless communication interface 2312, one or more antenna switches 2315, one or more antennas 2316, a bus 2317, a battery 2318, and an auxiliary controller 2319. In one implementation, the communication device 2300 (or the processor 2301) here may correspond to the above transmitting device or electronic device on the terminal side.

The processor 2301 may be, for example, a CPU or a system on chip (SoC), and controls functions of an application layer and other layers of the communication device 2300. The memory 2302 includes RAM and ROM, and stores data and programs executed by the processor 2301. The storage apparatus 2303 may include a storage medium such as a semiconductor memory and a hard disk. The external connection interface 2304 is an interface for connecting an external apparatus (such as a memory card and a universal serial bus (USB) apparatus) to the communication device 2300.

The camera apparatus 2306 includes an image sensor (such as a charge coupled device (CCD) and a complementary metal oxide semiconductor (CMOS)), and generates a captured image. Sensors 2307 may include a set of sensors such as measurement sensors, gyro sensors, geomagnetic sensors, and acceleration sensors. The microphone 2308 converts sound input to the communication device 2300 into an audio signal. The input apparatus 2309 includes, for example, a touch sensor configured to detect a touch on the screen of the display apparatus 2310, a keypad, a keyboard, buttons, or switches, and receives operations or information input from a user. The display apparatus 2310 includes a screen (such as a Liquid Crystal Display (LCD) and an Organic Light Emitting Diode (OLED) display), and displays an image output by the communication device 2300. The speaker 2311 converts an audio signal output from the communication device 2300 into sound.

The wireless communication interface 2312 supports any cellular communication scheme (such as LTE and LTE-Advanced), and performs wireless communication. The wireless communication interface 2312 may generally include, for example, a BB processor 2313 and an RF circuit 2314. The BB processor 2313 may perform, for example, encoding/decoding, modulation/demodulation, and multiplexing/demultiplexing, and perform various types of signal processing for wireless communication. Meanwhile, the RF circuit 2314 may include, for example, a mixer, a filter, and an amplifier, and transmit and receive wireless signals via the antenna 2316. The wireless communication interface 2312 may be a chip module on which a BB processor 2313 and an RF circuit 2314 are integrated. As shown in FIG. 23, the wireless communication interface 2312 may include multiple BB processors 2313 and multiple RF circuits 2314. Although FIG. 23 illustrates an example in which the wireless communication interface 2312 includes multiple BB processors 2313 and multiple RF circuits 2314, the wireless communication interface 2312 may also include a single BB processor 2313 or a single RF circuit 2314.

In addition, the wireless communication interface 2312 may support another type of wireless communication scheme, such as a short-range wireless communication scheme, a near field communication scheme, and a wireless local area network (LAN) scheme, in addition to the cellular communication scheme. In this case, the wireless communication interface 2312 may include a BB processor 2313 and an RF circuit 2314 for each wireless communication scheme.

Each of the antenna switches 2315 switches the connection destination of the antenna 2316 among multiple circuits included in the wireless communication interface 2312 (e.g., circuits for different wireless communication schemes).

Each of the antennas 2316 includes a single or multiple antenna elements (such as multiple antenna elements included in a MIMO antenna), and is used for the wireless communication interface 2312 to transmit and receive wireless signals. As shown in FIG. 23, the communication device 2300 may include multiple antennas 2316. Although FIG. 23 illustrates an example in which the communication device 2300 includes multiple antennas 2316, the communication device 2300 may also include a single antenna 2316.

In addition, the communication device 2300 may include an antenna 2316 for each wireless communication scheme. In this case, the antenna switch 2315 may be omitted from the configuration of the communication device 2300.

The bus 2317 connects the processor 2301, memory 2302, storage apparatus 2303, external connection interface 2304, camera apparatus 2306, sensor 2307, microphone 2308, input apparatus 2309, display apparatus 2310, speaker 2311, wireless communication interface 2312, and auxiliary controller 2319 to each other. The battery 2318 provides power to the various blocks of the communication device 2300 shown in FIG. 23 via feed lines, which are partially shown as dashed lines in the figure. The auxiliary controller 2319 operates the minimum necessary functions of the communication device 2300 in sleep mode, for example.

### Second example

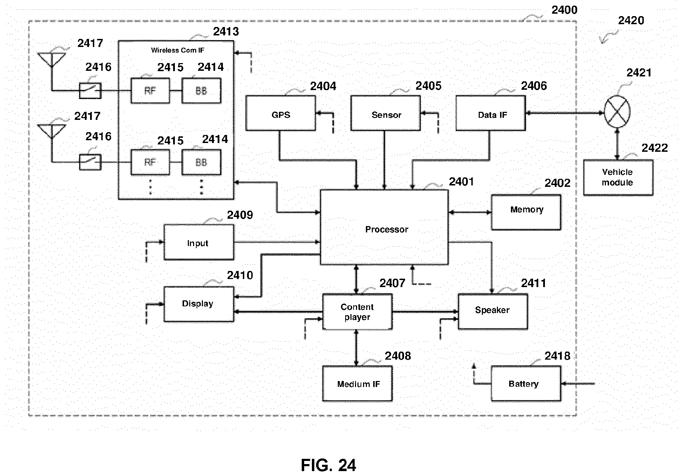

FIG. 24 is a block diagram showing an example of a schematic configuration of a vehicle navigation device 2400 to which the technology of the present disclosure may be applied. The vehicle navigation device 2400 includes a processor 2401, a memory 2402, a global positioning system (GPS) module 2404, a sensor 2405, a data interface 2406, a content player 2407, a storage medium interface 2408, an input apparatus 2409, a display apparatus 2410, a speaker 2411, a wireless communication interface 2413, one or more antenna switches 2416, one or more antennas 2417, and a battery 2418. In one implementation, the vehicle navigation device 2400 (or the processor 2401) here may correspond to a transmitting device or a terminal-side electronic device.

The processor 2401 may be, for example, a CPU or a SoC, and controls the navigation function and other functions of the vehicle navigation device 2400. The memory 2402 includes RAM and ROM, and stores data and programs executed by the processor 2401.

The GPS module 2404 measures the location (such as latitude, longitude, and altitude) of the vehicle navigation device 2400 using GPS signals received from GPS satellites. The sensors 2405 may include a set of sensors such as gyroscopic sensors, geomagnetic sensors, and air pressure sensors. The data interface 2406 is connected to, for example, the in-vehicle network 2421 via a terminal not shown, and acquires data generated by the vehicle (such as vehicle speed data).

The content player 2407 reproduces content stored in a storage medium (such as CD and DVD), which is inserted into the storage medium interface 2408. The input apparatus 2409 includes, for example, a touch sensor configured to detect a touch on the screen of the display apparatus 2410, a button, or a switch, and receives an operation or information input from a user. The display apparatus 2410 includes a screen such as an LCD or OLED display, and displays an image of a navigation function or reproduced content. The speaker 2411 outputs sound of a navigation function or reproduced content.

The wireless communication interface 2413 supports any cellular communication scheme such as LTE and LTE-Advanced, and performs wireless communication. The wireless communication interface 2413 may generally include, for example, a BB processor 2414 and an RF circuit 2415. The BB processor 2414 may perform, for example, encoding/decoding, modulation/demodulation, and multiplexing/demultiplexing, and perform various types of signal processing for wireless communication. Meanwhile, the RF circuit 2415 may include, for example, a mixer, a filter, and an amplifier, and transmit and receive wireless signals via the antenna 2417. The wireless communication interface 2413 may also be a chip module on which the BB processor 2414 and the RF circuit 2415 are integrated. As shown in FIG. 24, the wireless communication interface 2413 may include multiple BB processors 2414 and multiple RF circuits 2415. Although FIG. 24 illustrates an example in which the wireless communication interface 2413 includes multiple BB processors 2414 and multiple RF circuits 2415, the wireless communication interface 2413 may also include a single BB processor 2414 or a single RF circuit 2415.

In addition, the wireless communication interface 2413 may support another type of wireless communication scheme, such as a short-distance wireless communication scheme, a near field communication scheme, and a wireless LAN scheme, in addition to the cellular communication scheme. In this case, the wireless communication interface 2413 may include a BB processor 2414 and an RF circuit 2415 for each wireless communication scheme.

Each of the antenna switches 2416 switches the connection destination of the antenna 2417 among multiple circuits included in the wireless communication interface 2413 (such as circuits for different wireless communication schemes).

Each of the antennas 2417 includes a single or multiple antenna elements (such as multiple antenna elements included in a MIMO antenna), and is used for the wireless communication interface 2413 to transmit and receive wireless signals. As shown in FIG. 24, the vehicle navigation device 2400 may include multiple antennas 2417. Although FIG. 24 illustrates an example in which the vehicle navigation device 2400 includes multiple antennas 2417, the vehicle navigation device 2400 may also include a single antenna 2417.

In addition, the vehicle navigation device 2400 may include an antenna 2417 for each wireless communication scheme. In this case, the antenna switch 2416 may be omitted from the configuration of the vehicle navigation device 2400.

The battery 2418 provides power to various blocks of the vehicle navigation device 2400 shown in FIG. 24 via feeder lines, which are partially shown as dotted lines in the figure. The battery 2418 accumulates electric power supplied from the vehicle.

The technology of the present disclosure may also be implemented as an in-vehicle system (or vehicle) 2420 including one or more blocks in a vehicle navigation device 2400, an in-vehicle network 2421, and a vehicle module 2422. The vehicle module 2422 generates vehicle data (such as vehicle speed, engine speed, and breakdown information), and outputs the generated data to the in-vehicle network 2421.

The exemplary embodiments of the present disclosure are described above with reference to the accompanying drawings, but the present disclosure is of course not limited to the above examples. A person skilled in the art may find various alterations and modifications within the scope of the appended claims, and it should be understood that they will naturally come under the technical scope of the present disclosure.

It should be understood that the machine-readable storage medium or the machine-executable instructions in the program product according to the embodiments of the present disclosure may be configured to perform operations corresponding to the above device and method embodiments. When referring to the above device and method embodiments, the embodiments of the machine-readable storage medium or the program product will be obvious to those skilled in the art, so the description will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of implemented by software and/or firmware, respective programs constituting the respective software are stored in the storage medium of the related device, and various functions may be performed when the programs are executed.

For example, multiple functions included in one unit in the above embodiments may be implemented by separate apparatus. Alternatively, multiple functions implemented by multiple units in the above embodiments may be respectively implemented by separate apparatus. In addition, one of the above functions may be realized by multiple units. Needless to say, such a configuration is included in the technical scope of the present disclosure.

In this specification, the steps described in the flowcharts include not only processing performed in time series in the stated order but also processing performed in parallel or individually and not necessarily in time series. Furthermore, even in the steps processed in time series, needless to say, the order may be appropriately changed.

### 6. EXEMPLARY EMBODIMENTS OF THE PRESENT DISCLOSURE

According to the embodiments of the present disclosure, various exemplary implementations for realizing the concepts of the present disclosure may be conceived, including but not limited to the following embodiments:
1. An electronic device used at a base station, the electronic device comprising:
   processing circuitry configured to perform operations of:
   sending a single DCI to a user equipment (LTE), the single DCI used for scheduling a plurality of downlink transmissions associated with the UE, the single DCI indicating a respective scheduled beam for each of the plurality of downlink transmissions;
   determining a respective actual beam for each of the plurality of downlink transmissions; and
   performing a respective downlink transmission of the plurality of downlink transmissions using the determined respective actual beam.
2. The electronic device of embodiment 1, wherein:
   each of the plurality of downlink transmissions is a physical downlink shared channel (PDSCH) transmission; or
   each of the plurality of downlink transmissions is an aperiodic channel state information-reference signal (AP CSI-RS) transmission.
3. The electronic device of embodiment 1, wherein determining the respective actual beam comprises:
   determining, based on a first parameter associated with a capability of the LTE, that the respective actual beams for each of the plurality of downlink transmissions are a same beam.
4. The electronic device of embodiment 3, wherein determining the respective actual beam further comprises:
   determining a respective default beam that is associated with an earliest downlink transmission of the plurality of downlink transmissions as said same beam.
5. The electronic device of embodiment 1, wherein determining the respective actual beam comprises:
   determining, based on a second parameter associated with a capability of the UE, that respective actual beams for each of the plurality of downlink transmissions include different beams.
6. The electronic device of embodiment 5, wherein determining the respective actual beam further comprises:
   determining, based on a third parameter associated with a capability of the LTE, a time threshold;
   determining, from the plurality of downlink transmissions, a first set of downlink transmissions that are scheduled before the time threshold and a second set of downlink transmissions that are scheduled after the time threshold;
   for each downlink transmission in the first set of downlink transmissions, using a default beam, instead of the respective scheduled beam as indicated by the single DCI, as the respective actual beam for that downlink transmission; and
   for each downlink transmission in the second set of downlink transmissions, using the respective scheduled beam as indicated by the single DCI as the respective actual beam for that downlink transmission.
7. The electronic device of embodiment 6, wherein determining the respective actual beam further comprises:
   determining, based on a fourth parameter associated with a capability of the UE, whether the respective actual beams for each downlink transmission in the first set of downlink transmissions are a same beam or different beams.
8. The electronic device of embodiment 7, wherein determining the respective actual beam further comprises:
   in response to a determination that the respective actual beams for each downlink transmission in the first set of downlink transmissions are a same beam, determining a default beam that is associated with an earliest downlink transmission of the plurality of downlink transmissions as said same beam.
9. The electronic device of embodiment 7, wherein determining the respective actual beam further comprises:
   in response to a determination that the respective actual beams for each downlink transmission in the first set of downlink transmissions are not a same beam, determining, for each downlink transmission in the first set of downlink transmissions, a beam that corresponds to a CORESET with a smallest ID in a search space that is latest monitored by the UE, as the respective actual beam for that downlink transmission.
10. A method executed at a base station, comprising:
   sending a single DCI to a user equipment (LTE), the single DCI used for scheduling a plurality of downlink transmissions associated with the LTE, the single DCI indicating a respective scheduled beam for each of the plurality of downlink transmissions;
   determining a respective actual beam for each of the plurality of downlink transmissions; and
   performing a respective downlink transmission of the plurality of downlink transmissions using the determined respective actual beam.
11. An electronic device used at a user equipment (LTE), the electronic device comprising:
   processing circuitry configured to perform operations of:
   receiving a single DCI from a base station, the single DCI used for scheduling a plurality of downlink transmissions associated with the UE, the single DCI indicating a respective scheduled beam for each of the plurality of downlink transmissions;
   determining a respective actual beam for each of the plurality of downlink transmissions; and
   receiving a respective downlink transmission of the plurality of downlink transmissions using the determined respective actual beam.
12. The electronic device of embodiment 11, wherein:
   each of the plurality of downlink transmissions is a physical downlink shared channel (PDSCH) transmission; or
   each of the plurality of downlink transmissions is an aperiodic channel state information-reference signal (AP CSI-RS) transmission.
13. The electronic device of embodiment 12, determining the respective actual beam comprises:
   determining that the respective actual beams for each of the plurality of downlink transmissions are a same beam.
14. The electronic device of embodiment 13, wherein determining the respective actual beam further comprises:
   determining a respective default beam that is associated with an earliest downlink transmission of the plurality of downlink transmissions as said same beam.
15. The electronic device of embodiment 11, wherein determining the respective actual beam comprises:
   determining that respective actual beams for each of the plurality of downlink transmissions include different beams.
16. The electronic device of embodiment 15, determining the respective actual beam further comprises:
   determining a time threshold;
   determining, from the plurality of downlink transmissions, a first set of downlink transmissions that are scheduled before the time threshold and a second set of downlink transmissions that are scheduled after the time threshold;
   for each downlink transmission in the first set of downlink transmissions, using a default beam instead of the respective scheduled beam as indicated by the single DCI, as the respective actual beam for that downlink transmission; and
   for each downlink transmission in the second set of downlink transmissions, using the respective scheduled beam as indicated by the single DCI, as the respective actual beam for that downlink transmission.
17. The electronic device of embodiment 16, wherein determining the respective actual beam further comprises:
   determining whether the respective actual beams for each downlink transmission in the first set of downlink transmissions are a same beam or different beams.
18. The electronic device of embodiment 17, wherein determining the respective actual beam further comprises:
   in response to a determination that the respective actual beams for each downlink transmission in the first set of downlink transmissions are a same beam, determining a default beam that is associated with an earliest downlink transmission of the plurality of downlink transmissions as said same beam.
19. The electronic device of embodiment 17, wherein determining the respective actual beam further comprises:
   in response to a determination that the respective actual beams for each downlink transmission in the first set of downlink transmissions are not a same beam, determining, for each downlink transmission in the first set of downlink transmissions, a beam that corresponds to a CORESET with a smallest ID in a search space that is latest monitored by the UE, as the respective actual beam for that downlink transmission.
20. A method executed at a user equipment (LTE), comprising:
   receiving a single DCI from a base station, the single DCI used for scheduling a plurality of downlink transmissions associated with the LTE, the single DCI indicating a respective scheduled beam for each of the plurality of downlink transmissions;
   determining a respective actual beam for each of the plurality of downlink transmissions; and
   receiving a respective downlink transmission of the plurality of downlink transmissions using the determined respective actual beam.
21. An electronic device used at a base station, the electronic device comprising:
   processing circuitry configured to perform operations of:
   sending a single DCI to a user equipment (LTE), the single DCI indicating a plurality of channel state information-reference signal (CSI-RS) resource sets across a plurality of time slots, wherein the plurality of CSI-RS resource sets are associated with a same reporting configuration;
   in each of the plurality of time slots, sending a CSI-RS transmission to the LTE using a respective CSI-RS resource set of the plurality of CSI-RS resource sets; and
   in a report based on said same reporting configuration, receiving a CSI report associated with measurements of the plurality of time slots from the LTE.
22. The electronic device of embodiment 21, wherein a value of a repetition parameter (*Repetition*) for each of the plurality of CSI-RS resource sets is configured to be closed (*OFF*).
23. The electronic device of embodiment 21, wherein the CSI report is generated based on measurements of each of the plurality of time slots, and the measurements of each time slot are generated based on different single receive beams of the LTE.
24. The electronic device of embodiment 20, wherein the base station operates in a frequency band of 52.6GHz-71 GHz.
25. A method executed at a base station, comprising:
   sending a single DCI to a user equipment (LTE), the single DCI indicating a plurality of channel state information-reference signal (CSI-RS) resource sets across a plurality of time slots, wherein the plurality of CSI-RS resource sets are associated with a same reporting configuration;
   in each of the plurality of time slots, sending a CSI-RS to the LTE using a respective CSI-RS resource set in the plurality of CSI-RS resource sets; and
   in a report based on said same reporting configuration, receiving a CSI report associated with CSI measurements of the plurality of time slots from the LTE.
26. An electronic device used at a user equipment (UE), the electronic device comprising:
   processing circuitry configured to perform operations of:
   receiving a single DCI from a base station, the single DCI indicating a plurality of channel state information-reference signal (CSI-RS) resource sets across a plurality of time slots, wherein the plurality of CSI-RS resource sets are associated with a same reporting configuration;
   in each of the plurality of time slots, receiving, from the base station, a CSI-RS transmission sent using a respective CSI-RS resource set in the plurality of CSI-RS resource sets to perform measurements; and
   in a report based on said same reporting configuration, sending a CSI report associated with the measurements of the plurality of time slots to the base station.
27. The electronic device of embodiment 26, wherein a value of a repetition parameter (*Repetition*) for each of the plurality of CSI-RS resource sets is configured to be closed (*OFF*).
28. The electronic device of embodiment 26, wherein performing measurements comprises: performing measurements using different single receive beams in each of the plurality of time slots.
29. The electronic device of embodiment 20, wherein the LTE operates in a frequency band of 52.6GHz-71GHz.
30. A method executed at a user equipment (LTE), comprising:
   receiving a single DCI from a base station, the single DCI indicating a plurality of channel state information-reference signal (CSI-RS) resource sets across a plurality of time slots, wherein the plurality of CSI-RS resource sets are associated with a same reporting configuration;
   in each of the plurality of time slots, receiving, from the base station, CSI-RS sent using a respective CSI-RS resource set in the plurality of CSI-RS resource sets to perform measurements; and
   in a report based on said same reporting configuration, sending a CSI report associated with the measurements of the plurality of time slots to the base station.
31. An electronic device used at a base station, the electronic device comprising:
   processing circuitry configured to perform operations of:
   sending a single DCI to a user equipment (UE), the single DCI being configured to schedule a plurality of synchronization signal block (SSB) resources into a plurality of time slots; and
   sending an SSB transmission in each of the plurality of time slots.
32. The electronic device of embodiment 31, wherein sending an SSB transmission in each of the plurality of time slots comprises:
   in each of the plurality of time slots, performing the SSB transmission using a plurality of transmit beams in different directions corresponding to the plurality of SSB resources, to perform downlink beam scanning.
33. The electronic device of embodiment 32, wherein the downlink beam scanning in each of the plurality of time slots is based on a respective single receive beam of the LTE.
34. The electronic device of embodiment 32, wherein the base station operates in a frequency band of 52.6GHz-71GHz.
35. A method executed at a base station, comprising:
   sending a single DCI to a user equipment (LTE), the single DCI being configured to schedule a plurality of synchronization signal block (SSB) resources into a plurality of time slots; and
   sending an SSB transmission in each of the plurality of time slots.
36. An electronic device used at a user equipment (UE), the electronic device comprising:
   processing circuitry configured to perform operations of:
   receiving a single DCI from a base station, the single DCI being configured to schedule a plurality of synchronization signal block (SSB) resources into a plurality of time slots; and
   receiving an SSB transmission in each of the plurality of time slots.
37. The electronic device of embodiment 36, wherein receiving an SSB transmission in each time slot comprises:
   receiving the SSB transmission from the base station using a single receive beam in each time slot.
38. The electronic device of embodiment 37, wherein the SSB transmission received from the base station in each time slot is performed by the base station using a plurality of transmit beams in different directions corresponding to the plurality of SSB resources.
39. The electronic device of embodiment 37, wherein the LTE operates in a frequency band of 52.6GHz-71GHz.
40. A method executed at a user equipment (LTE), comprising:
   receiving a single DCI from a base station, the single DCI being configured to schedule a plurality of synchronization signal block (SSB) resources into a plurality of time slots; and
   receiving an SSB transmission in each of the plurality of time slots.
41. An electronic device used at a base station, the electronic device comprising:
   processing circuitry configured to perform operations of:
   sending a single DCI to a user equipment (UE), the single DCI being configured to trigger a Sounding Reference Signal (SRS) resource set comprising a plurality of SRS resources, and schedule the plurality of SRS resources into a plurality of time slots; and
   receiving an SRS transmission from the LTE in each of the plurality of time slots.
42. The electronic device of embodiment 41, wherein the plurality of SRS resources are scheduled into a plurality of time slots such that the LTE uses only one SRS resource of the plurality of SRS resources in each of the plurality of time slots to send the SRS transmission.
43. The electronic device of embodiment 42, wherein a width of a subcarrier (SCS) used by the base station is 480 kHz or 960 kHz.
44. The electronic device of embodiment 41, wherein the plurality of SRS resources are scheduled into the plurality of time slots such that the LTE uses more than one SRS resource of the plurality of SRS resources in each of the plurality of time slots to perform transmissions.
45. A method executed at a base station, comprising:
   sending a single DCI to a user equipment (LTE), the single DCI being configured to trigger a Sounding Reference Signal (SRS) resource set comprising a plurality of SRS resources, and schedule the plurality of SRS resources into a plurality of time slots; and
   receiving an SRS transmission in each of the plurality of time slots.
46. An electronic device used at a user equipment (UE), the electronic device comprising:
   processing circuitry configured to perform operations of:
   receiving a single DCI from a base station, the single DCI being configured to trigger a Sounding Reference Signal (SRS) resource set comprising a plurality of SRS resources, and the plurality of SRS resources being scheduled into a plurality of time slots; and
   sending an SRS transmission to base station in each of the plurality of time slots.
47. The electronic device of embodiment 46, wherein the plurality of SRS resources are scheduled into the plurality of time slots such that the LTE uses only one SRS resource of the plurality of SRS resources in each of the plurality of time slots to send the SRS transmission.
48. The electronic device of embodiment 47, wherein the width of a subcarrier (SCS) used by the UE is 480kHz or 960kHz.
49. The electronic device of embodiment 46, wherein the plurality of SRS resources are scheduled into the plurality of time slots such that the LTE uses more than one SRS resource of the plurality of SRS resources in each of the plurality of time slots to send SRS transmissions.
50. A method executed at a user equipment (LTE), comprising:
   receiving a single DCI from a base station, the single DCI being configured to trigger a Sounding Reference Signal (SRS) resource set comprising a plurality of SRS resources, the plurality of SRS resources being scheduled into a plurality of time slots; and
   sending an SRS transmission to base station 110 in each of the plurality of time slots.
51. An electronic device used at a base station, the electronic device comprising:
   processing circuitry configured to perform operations of:
   configuring a first offset associated with a first transmission between the base station and a user equipment (LTE);
   configuring a Channel Occupancy Time (COT) associated with the base station and the UE, the COT being included in a COT message, the COT indicating a specific time period during which the base station and the UE are allowed to communicate with each other on an unlicensed frequency band;
   calculating a specific time for the first transmission based on the COT and the first offset; and
   performing the first transmission at the specific time.
52. The electronic device of embodiment 51, wherein the first transmission is performed in response to a determination that the specific time is within the specific time period indicated by the COT.
53. The electronic device of embodiment 51, wherein configuring the first offset comprises:
   configuring information associated with the first offset in an RRC signaling; and
   sending the RRC signaling to the UE.
54. The electronic device of embodiment 51, wherein configuring the first offset comprises: configuring the first offset using at least the COT message.
55. The electronic device of embodiment 54, wherein configuring the first offset comprises:
   configuring a list of optional offsets in an RRC signaling;
   configuring an offset index using the COT message; and
   configuring an optional offset corresponding to the offset index in the list of optional offsets as the first offset.
56. The electronic device of embodiment 55, wherein a size of the first offset is configured based on a priority of the UE.
57. The electronic device of embodiment 54, wherein the COT message includes an indication as to whether to trigger the first transmission.
58. The electronic device of embodiment 51, wherein the COT message is sent by the base station to the UE, and the first transmission is one of:
   a downlink reference signal (DL RS) transmission; or
   a PDSCH transmission.
59. The electronic device of embodiment 51, wherein the COT message is received by the base station from the UE, and the first transmission is one of:
   an uplink reference signal (UL RS) transmission;
   a PUSCH transmission; or
   a PUCCH transmission.
60. A method executed at a base station, comprising:
   configuring a first offset associated with a first transmission between the base station and a user equipment (LTE);
   configuring a Channel Occupancy Time (COT) associated with the base station and the UE, the COT being included in a COT message, the COT indicating a specific time period during which the base station and the LTE are allowed to communicate with each other on an unlicensed frequency band;
   calculating a specific time for the first transmission based on the COT and the first offset; and
   performing the first transmission at the specific time.
61. An electronic device used at a user equipment (UE), the electronic device comprising:
   processing circuitry configured to perform operations of:
   configuring a first offset associated with a first transmission between a base station and the UE;
   configuring a Channel Occupancy Time (COT) associated with the base station and the UE, the COT being included in a COT message, the COT indicating a specific time period during which the base station and the UE are allowed to communicate with each other on an unlicensed frequency band;
   calculating a specific time for the first transmission based on the COT and the first offset; and
   performing the first transmission at the specific time.
62. The electronic device of embodiment 61, wherein the first transmission is performed in response to a determination that the specific time is within the specific time period indicated by the COT.
63. The electronic device of embodiment 62, wherein configuring the first offset comprises: configuring the first offset based at least in part on an RRC signaling received from the base station.
64. The electronic device of embodiment 61, wherein configuring the first offset comprises: configuring the first offset using at least the COT message.
65. The electronic device of embodiment 64, wherein configuring the first offset comprises:
   extracting a list of optional offsets from an RRC signaling;
   configuring an offset index using the COT message; and
   configuring an optional offset corresponding to the offset index in the list of optional offsets as the first offset.
66. The electronic device of embodiment 65, wherein a size of the first offset is determined based on a priority of the UE.
67. The electronic device of embodiment 64, wherein the COT message includes an indication as to whether to trigger the first transmission.
68. The electronic device of embodiment 61, wherein the COT message is received by the UE from the base station, and the first transmission is one of:
   a downlink reference signal (DL RS) transmission; or
   a PDSCH transmission.
69. The electronic device of embodiment 61, wherein the COT message is sent by the UE to the base station, and the first transmission is one of:
   an uplink reference signal (UL RS) transmission;
   a PUSCH transmission; or
   a PUCCH transmission.
70. A method executed at a user equipment (LTE), comprising:
   configuring a first offset associated with a first transmission between a base station and the UE;
   configuring a Channel Occupancy Time (COT) associated with the base station and the UE, the COT being included in a COT message, the COT indicating a specific time period during which the base station and the LTE are allowed to communicate with each other on an unlicensed frequency band;
   calculating a specific time for the first transmission based on the COT and the first offset; and
   performing the first transmission at the specific time.
71. An electronic device used at a base station, the electronic device comprising:
   processing circuitry configured to perform operations of:
   determining a Channel Occupancy Time (COT) associated with the base station and a user equipment (LTE), the COT being included in a COT message, the COT indicating a specific time period during which the base station and the LTE are allowed to communicate with each other on an unlicensed frequency band;
   determining whether an expected transmission time for a specific transmission of periodic transmissions with the LTE is within the COT;
   in response to the expected transmission time for the specific transmission not being within the COT, determining the specific transmission as a deactivated transmission; and
   in response to the expected transmission time for the specific transmission being within the COT, determining the specific transmission as an activated transmission.
72. The electronic device of embodiment 71, wherein determining the COT comprises:
   performing a Listen Before Talk (LBT) operation by the base station; and
   determining the COT by the base station based on the LBT operation.
73. The electronic device of embodiment 72, wherein the periodic transmissions include one of:
   a downlink semi-persistent reference signal (SP RS) transmission; or
   a semi-persistent scheduling physical downlink shared channel (SPS PDSCH) transmission.
74. The electronic device of embodiment 71, wherein determining the COT comprises:
   determining the COT based on the COT message from the LTE.
75. The electronic device of embodiment 74, wherein the periodic transmissions include one of:
   an uplink semi-persistent sounding reference signal (SP SRS) transmission; or
   a configuration granted physical uplink shared channel (CG PUSCH) transmission.
76. The electronic device of embodiment 71, wherein the processing circuitry is further configured to perform operations of:
   performing the activated specific transmission, and not performing the deactivated specific transmission.
77. A method executed at a base station, comprising:
   determining a Channel Occupancy Time (COT) associated with the base station and a user equipment (LTE), the COT being included in a COT message, the COT indicating a specific time period during which the base station and the LTE are allowed to communicate with each other on an unlicensed frequency band;
   determining whether an expected transmission time for a specific transmission of periodic transmissions with the LTE is within the COT;
   in response to the expected transmission time for the specific transmission not being within the COT, determining the specific transmission as a deactivated transmission; and
   in response to the expected transmission time for the specific transmission being within the COT, determining the specific transmission as an activated transmission.
78. An electronic device used at a user equipment (UE), the electronic device comprising:
   processing circuitry configured to perform operations of:
   determining a Channel Occupancy Time (COT) associated with a base station and the UE, the COT being included in a COT message, the COT indicating a specific time period during which the base station and the UE are allowed to communicate with each other on an unlicensed frequency band;
   determining whether an expected transmission time for a specific transmission of periodic transmissions with the LTE is within the COT;
   in response to the expected transmission time for the specific transmission not being within the COT, determining the specific transmission as a deactivated transmission; and
   in response to the expected transmission time for the specific transmission being within the COT, determining the specific transmission as an activated transmission.
79. The electronic device of embodiment 78, wherein determining the COT comprises:
   determining the COT based on the COT message from the base station.
80. The electronic device of embodiment 79, wherein the periodic transmissions include one of:
   a downlink semi-persistent reference signal (SP RS) transmission; or
   a semi-persistent scheduling physical downlink shared channel (SPS PDSCH) transmission.
81. The electronic device of embodiment 78, wherein determining the COT comprises:
   performing a Listen Before Talk (LBT) operation by the UE; and
   determining the COT by the LTE based on the LBT operation.
82. The electronic device of embodiment 81, wherein the periodic transmissions include one of:
   an uplink semi-persistent sounding reference signal (SP SRS) transmission; or
   a configuration granted physical uplink shared channel (CG PUSCH) transmission.
83. The electronic device of embodiment 78, wherein the processing circuitry is further configured to perform operations of:
   performing the activated specific transmission, and not performing the deactivated specific transmission.
84. A method executed at a user equipment (LTE), comprising:
   determining a Channel Occupancy Time (COT) associated with a base station and the UE, the COT being included in a COT message, the COT indicating a specific time period during which the base station and the LTE are allowed to communicate with each other on an unlicensed frequency band;
   determining whether an expected transmission time for a specific transmission of periodic transmissions with the LTE is within the COT;
   in response to the expected transmission time for the specific transmission not being within the COT, determining the specific transmission as a deactivated transmission; and
   in response to the expected transmission time for the specific transmission being within the COT, determining the specific transmission as an activated transmission.
85. A computer-readable storage medium having one or more instructions stored thereon, which, when executed by one or more processing circuits of an electronic device, cause the electronic device to perform the method of any one of embodiments 10, 20, 25, 30, 35, 40, 45, 50, 60, 70, 77, or 84.
86. A computer program product comprising one or more instructions which, when executed by one or more processing circuits of an electronic device, cause the electronic device to perform the method of any one of embodiments 10, 20, 25, 30, 35, 40, 45, 50, 60, 70, 77, or 84.

## Claims

1. An electronic device used at a base station, the electronic device comprising:
processing circuitry configured to perform operations of:
sending a single DCI to a user equipment (LTE), the single DCI used for scheduling a plurality of downlink transmissions associated with the LTE, the single DCI indicating a respective scheduled beam for each of the plurality of downlink transmissions;
determining a respective actual beam for each of the plurality of downlink transmissions; and
performing a respective downlink transmission of the plurality of downlink transmissions using the determined respective actual beam.

2. The electronic device of claim 1, wherein:
each of the plurality of downlink transmissions is a physical downlink shared channel (PDSCH) transmission; or
each of the plurality of downlink transmissions is an aperiodic channel state information-reference signal (AP CSI-RS) transmission.

3. The electronic device of claim 1, wherein determining the respective actual beam comprises:
determining, based on a first parameter associated with a capability of the LTE, that the respective actual beams for each of the plurality of downlink transmissions are a same beam.

4. The electronic device of claim 3, wherein determining the respective actual beam further comprises:
determining a respective default beam that is associated with an earliest downlink transmission of the plurality of downlink transmissions as said same beam.

5. The electronic device of claim 1, wherein determining the respective actual beam comprises:
determining, based on a second parameter associated with a capability of the UE, that respective actual beams for each of the plurality of downlink transmissions include different beams.

6. The electronic device of claim 5, wherein determining the respective actual beam further comprises:
determining, based on a third parameter associated with a capability of the LTE, a time threshold;
determining, from the plurality of downlink transmissions, a first set of downlink transmissions that are scheduled before the time threshold and a second set of downlink transmissions that are scheduled after the time threshold;
for each downlink transmission in the first set of downlink transmissions, using a default beam, instead of the respective scheduled beam as indicated by the single DCI, as the respective actual beam for that downlink transmission; and
for each downlink transmission in the second set of downlink transmissions, using the respective scheduled beam as indicated by the single DCI as the respective actual beam for that downlink transmission.

7. The electronic device of claim 6, wherein determining the respective actual beam further comprises:
determining, based on a fourth parameter associated with a capability of the UE, whether the respective actual beams for each downlink transmission in the first set of downlink transmissions are a same beam or different beams.

8. The electronic device of claim 7, wherein determining the respective actual beam further comprises:
in response to a determination that the respective actual beams for each downlink transmission in the first set of downlink transmissions are a same beam, determining a default beam that is associated with an earliest downlink transmission of the plurality of downlink transmissions as said same beam.

9. The electronic device of claim 7, wherein determining the respective actual beam further comprises:
in response to a determination that the respective actual beams for each downlink transmission in the first set of downlink transmissions are not a same beam, determining, for each downlink transmission in the first set of downlink transmissions, a beam that corresponds to a CORESET with a smallest ID in a search space that is latest monitored by the UE, as the respective actual beam for that downlink transmission.

10. A method executed at a base station, comprising:
sending a single DCI to a user equipment (LTE), the single DCI used for scheduling a plurality of downlink transmissions associated with the LTE, the single DCI indicating a respective scheduled beam for each of the plurality of downlink transmissions;
determining a respective actual beam for each of the plurality of downlink transmissions; and
performing a respective downlink transmission of the plurality of downlink transmissions using the determined respective actual beam.

11. An electronic device used at a user equipment (LTE), the electronic device comprising:
processing circuitry configured to perform operations of:
receiving a single DCI from a base station, the single DCI used for scheduling a plurality of downlink transmissions associated with the LTE, the single DCI indicating a respective scheduled beam for each of the plurality of downlink transmissions;
determining a respective actual beam for each of the plurality of downlink transmissions; and
receiving a respective downlink transmission of the plurality of downlink transmissions using the determined respective actual beam.

12. The electronic device of claim 11, wherein:
each of the plurality of downlink transmissions is a physical downlink shared channel (PDSCH) transmission; or
each of the plurality of downlink transmissions is an aperiodic channel state information-reference signal (AP CSI-RS) transmission.

13. The electronic device of claim 12, determining the respective actual beam comprises:
determining that the respective actual beams for each of the plurality of downlink transmissions are a same beam.

14. The electronic device of claim 13, wherein determining the respective actual beam further comprises:
determining a respective default beam that is associated with an earliest downlink transmission of the plurality of downlink transmissions as said same beam.

15. The electronic device of claim 11, wherein determining the respective actual beam comprises:
determining that respective actual beams for each of the plurality of downlink transmissions include different beams.

16. The electronic device of claim 15, determining the respective actual beam further comprises:
determining a time threshold;
determining, from the plurality of downlink transmissions, a first set of downlink transmissions that are scheduled before the time threshold and a second set of downlink transmissions that are scheduled after the time threshold;
for each downlink transmission in the first set of downlink transmissions, using a default beam instead of the respective scheduled beam as indicated by the single DCI, as the respective actual beam for that downlink transmission; and
for each downlink transmission in the second set of downlink transmissions, using the respective scheduled beam as indicated by the single DCI, as the respective actual beam for that downlink transmission.

17. The electronic device of claim 16, wherein determining the respective actual beam further comprises:
determining whether the respective actual beams for each downlink transmission in the first set of downlink transmissions are a same beam or different beams.

18. The electronic device of claim 17, wherein determining the respective actual beam further comprises:
in response to a determination that the respective actual beams for each downlink transmission in the first set of downlink transmissions are a same beam, determining a default beam that is associated with an earliest downlink transmission of the plurality of downlink transmissions as said same beam.

19. The electronic device of claim 17, wherein determining the respective actual beam further comprises:
in response to a determination that the respective actual beams for each downlink transmission in the first set of downlink transmissions are not a same beam, determining, for each downlink transmission in the first set of downlink transmissions, a beam that corresponds to a CORESET with a smallest ID in a search space that is latest monitored by the UE, as the respective actual beam for that downlink transmission.

20. A method executed at a user equipment (LTE), comprising:
receiving a single DCI from a base station, the single DCI used for scheduling a plurality of downlink transmissions associated with the LTE, the single DCI indicating a respective scheduled beam for each of the plurality of downlink transmissions;
determining a respective actual beam for each of the plurality of downlink transmissions; and
receiving a respective downlink transmission of the plurality of downlink transmissions using the determined respective actual beam.

21. An electronic device used at a base station, the electronic device comprising:
processing circuitry configured to perform operations of:
sending a single DCI to a user equipment (LTE), the single DCI indicating a plurality of channel state information-reference signal (CSI-RS) resource sets across a plurality of time slots, wherein the plurality of CSI-RS resource sets are associated with a same reporting configuration;
in each of the plurality of time slots, sending a CSI-RS transmission to the LTE using a respective CSI-RS resource set of the plurality of CSI-RS resource sets; and
in a report based on said same reporting configuration, receiving a CSI report associated with measurements of the plurality of time slots from the LTE.

22. The electronic device of claim 21, wherein a value of a repetition parameter *(Repetition)* for each of the plurality of CSI-RS resource sets is configured to be closed *(OFF).*

23. The electronic device of claim 21, wherein the CSI report is generated based on measurements of each of the plurality of time slots, and the measurements of each time slot are generated based on different single receive beams of the LTE.

24. The electronic device of claim 20, wherein the base station operates in a frequency band of 52.6GHz-71GHz.

25. A method executed at a base station, comprising:
sending a single DCI to a user equipment (LTE), the single DCI indicating a plurality of channel state information-reference signal (CSI-RS) resource sets across a plurality of time slots, wherein the plurality of CSI-RS resource sets are associated with a same reporting configuration;
in each of the plurality of time slots, sending a CSI-RS to the LTE using a respective CSI-RS resource set in the plurality of CSI-RS resource sets; and
in a report based on said same reporting configuration, receiving a CSI report associated with CSI measurements of the plurality of time slots from the LTE.

26. An electronic device used at a user equipment (UE), the electronic device comprising:
processing circuitry configured to perform operations of:
receiving a single DCI from a base station, the single DCI indicating a plurality of channel state information-reference signal (CSI-RS) resource sets across a plurality of time slots, wherein the plurality of CSI-RS resource sets are associated with a same reporting configuration;
in each of the plurality of time slots, receiving, from the base station, a CSI-RS transmission sent using a respective CSI-RS resource set in the plurality of CSI-RS resource sets to perform measurements; and
in a report based on said same reporting configuration, sending a CSI report associated with the measurements of the plurality of time slots to the base station.

27. The electronic device of claim 26, wherein a value of a repetition parameter *(Repetition)* for each of the plurality of CSI-RS resource sets is configured to be closed *(OFF).*

28. The electronic device of claim 26, wherein performing measurements comprises: performing measurements using different single receive beams in each of the plurality of time slots.

29. The electronic device of claim 20, wherein the LTE operates in a frequency band of 52.6GHz-71GHz.

30. A method executed at a user equipment (LTE), comprising:
receiving a single DCI from a base station, the single DCI indicating a plurality of channel state information-reference signal (CSI-RS) resource sets across a plurality of time slots, wherein the plurality of CSI-RS resource sets are associated with a same reporting configuration;
in each of the plurality of time slots, receiving, from the base station, CSI-RS sent using a respective CSI-RS resource set in the plurality of CSI-RS resource sets to perform measurements; and
in a report based on said same reporting configuration, sending a CSI report associated with the measurements of the plurality of time slots to the base station.

31. An electronic device used at a base station, the electronic device comprising:
processing circuitry configured to perform operations of:
sending a single DCI to a user equipment (UE), the single DCI being configured to schedule a plurality of synchronization signal block (SSB) resources into a plurality of time slots; and
sending an SSB transmission in each of the plurality of time slots.

32. The electronic device of claim 31, wherein sending an SSB transmission in each of the plurality of time slots comprises:
in each of the plurality of time slots, performing the SSB transmission using a plurality of transmit beams in different directions corresponding to the plurality of SSB resources, to perform downlink beam scanning.

33. The electronic device of claim 32, wherein the downlink beam scanning in each of the plurality of time slots is based on a respective single receive beam of the LTE.

34. The electronic device of claim 32, wherein the base station operates in a frequency band of 52.6GHz-71GHz.

35. A method executed at a base station, comprising:
sending a single DCI to a user equipment (LTE), the single DCI being configured to schedule a plurality of synchronization signal block (SSB) resources into a plurality of time slots; and
sending an SSB transmission in each of the plurality of time slots.

36. An electronic device used at a user equipment (UE), the electronic device comprising:
processing circuitry configured to perform operations of:
receiving a single DCI from a base station, the single DCI being configured to schedule a plurality of synchronization signal block (SSB) resources into a plurality of time slots; and
receiving an SSB transmission in each of the plurality of time slots.

37. The electronic device of claim 36, wherein receiving an SSB transmission in each time slot comprises:
receiving the SSB transmission from the base station using a single receive beam in each time slot.

38. The electronic device of claim 37, wherein the SSB transmission received from the base station in each time slot is performed by the base station using a plurality of transmit beams in different directions corresponding to the plurality of SSB resources.

39. The electronic device of claim 37, wherein the LTE operates in a frequency band of 52.6GHz-71GHz.

40. A method executed at a user equipment (LTE), comprising:
receiving a single DCI from a base station, the single DCI being configured to schedule a plurality of synchronization signal block (SSB) resources into a plurality of time slots; and
receiving an SSB transmission in each of the plurality of time slots.

41. An electronic device used at a base station, the electronic device comprising:
processing circuitry configured to perform operations of:
sending a single DCI to a user equipment (UE), the single DCI being configured to trigger a Sounding Reference Signal (SRS) resource set comprising a plurality of SRS resources, and schedule the plurality of SRS resources into a plurality of time slots; and
receiving an SRS transmission from the LTE in each of the plurality of time slots.

42. The electronic device of claim 41, wherein the plurality of SRS resources are scheduled into a plurality of time slots such that the UE uses only one SRS resource of the plurality of SRS resources in each of the plurality of time slots to send the SRS transmission.

43. The electronic device of claim 42, wherein a width of a subcarrier (SCS) used by the base station is 480 kHz or 960 kHz.

44. The electronic device of claim 41, wherein the plurality of SRS resources are scheduled into the plurality of time slots such that the LTE uses more than one SRS resource of the plurality of SRS resources in each of the plurality of time slots to perform transmissions.

45. A method executed at a base station, comprising:
sending a single DCI to a user equipment (LTE), the single DCI being configured to trigger a Sounding Reference Signal (SRS) resource set comprising a plurality of SRS resources, and schedule the plurality of SRS resources into a plurality of time slots; and
receiving an SRS transmission in each of the plurality of time slots.

46. An electronic device used at a user equipment (UE), the electronic device comprising:
processing circuitry configured to perform operations of:
receiving a single DCI from a base station, the single DCI being configured to trigger a Sounding Reference Signal (SRS) resource set comprising a plurality of SRS resources, and the plurality of SRS resources being scheduled into a plurality of time slots; and
sending an SRS transmission to base station in each of the plurality of time slots.

47. The electronic device of claim 46, wherein the plurality of SRS resources are scheduled into the plurality of time slots such that the LTE uses only one SRS resource of the plurality of SRS resources in each of the plurality of time slots to send the SRS transmission.

48. The electronic device of claim 47, wherein the width of a subcarrier (SCS) used by the LTE is 480kHz or 960kHz.

49. The electronic device of claim 46, wherein the plurality of SRS resources are scheduled into the plurality of time slots such that the LTE uses more than one SRS resource of the plurality of SRS resources in each of the plurality of time slots to send SRS transmissions.

50. A method executed at a user equipment (LTE), comprising:
receiving a single DCI from a base station, the single DCI being configured to trigger a Sounding Reference Signal (SRS) resource set comprising a plurality of SRS resources, the plurality of SRS resources being scheduled into a plurality of time slots; and
sending an SRS transmission to base station 110 in each of the plurality of time slots.

51. An electronic device used at a base station, the electronic device comprising:
processing circuitry configured to perform operations of:
configuring a first offset associated with a first transmission between the base station and a user equipment (LTE);
configuring a Channel Occupancy Time (COT) associated with the base station and the UE, the COT being included in a COT message, the COT indicating a specific time period during which the base station and the UE are allowed to communicate with each other on an unlicensed frequency band;
calculating a specific time for the first transmission based on the COT and the first offset; and
performing the first transmission at the specific time.

52. The electronic device of claim 51, wherein the first transmission is performed in response to a determination that the specific time is within the specific time period indicated by the COT.

53. The electronic device of claim 51, wherein configuring the first offset comprises:
configuring information associated with the first offset in an RRC signaling; and
sending the RRC signaling to the UE.

54. The electronic device of claim 51, wherein configuring the first offset comprises: configuring the first offset using at least the COT message.

55. The electronic device of claim 54, wherein configuring the first offset comprises:
configuring a list of optional offsets in an RRC signaling;
configuring an offset index using the COT message; and
configuring an optional offset corresponding to the offset index in the list of optional offsets as the first offset.

56. The electronic device of claim 55, wherein a size of the first offset is configured based on a priority of the LTE.

57. The electronic device of claim 54, wherein the COT message includes an indication as to whether to trigger the first transmission.

58. The electronic device of claim 51, wherein the COT message is sent by the base station to the UE, and the first transmission is one of:
a downlink reference signal (DL RS) transmission; or
a PDSCH transmission.

59. The electronic device of claim 51, wherein the COT message is received by the base station from the UE, and the first transmission is one of:
an uplink reference signal (UL RS) transmission;
a PUSCH transmission; or
a PUCCH transmission.

60. A method executed at a base station, comprising:
configuring a first offset associated with a first transmission between the base station and a user equipment (LTE);
configuring a Channel Occupancy Time (COT) associated with the base station and the UE, the COT being included in a COT message, the COT indicating a specific time period during which the base station and the LTE are allowed to communicate with each other on an unlicensed frequency band;
calculating a specific time for the first transmission based on the COT and the first offset; and
performing the first transmission at the specific time.

61. An electronic device used at a user equipment (UE), the electronic device comprising:
processing circuitry configured to perform operations of:
configuring a first offset associated with a first transmission between a base station and the UE;
configuring a Channel Occupancy Time (COT) associated with the base station and the UE, the COT being included in a COT message, the COT indicating a specific time period during which the base station and the UE are allowed to communicate with each other on an unlicensed frequency band;
calculating a specific time for the first transmission based on the COT and the first offset; and
performing the first transmission at the specific time.

62. The electronic device of claim 61, wherein the first transmission is performed in response to a determination that the specific time is within the specific time period indicated by the COT.

63. The electronic device of claim 62, wherein configuring the first offset comprises: configuring the first offset based at least in part on an RRC signaling received from the base station.

64. The electronic device of claim 61, wherein configuring the first offset comprises: configuring the first offset using at least the COT message.

65. The electronic device of claim 64, wherein configuring the first offset comprises:
extracting a list of optional offsets from an RRC signaling;
configuring an offset index using the COT message; and
configuring an optional offset corresponding to the offset index in the list of optional offsets as the first offset.

66. The electronic device of claim 65, wherein a size of the first offset is determined based on a priority of the LTE.

67. The electronic device of claim 64, wherein the COT message includes an indication as to whether to trigger the first transmission.

68. The electronic device of claim 61, wherein the COT message is received by the UE from the base station, and the first transmission is one of:
a downlink reference signal (DL RS) transmission; or
a PDSCH transmission.

69. The electronic device of claim 61, wherein the COT message is sent by the LTE to the base station, and the first transmission is one of:
an uplink reference signal (UL RS) transmission;
a PUSCH transmission; or
a PUCCH transmission.

70. A method executed at a user equipment (LTE), comprising:
configuring a first offset associated with a first transmission between a base station and the UE;
configuring a Channel Occupancy Time (COT) associated with the base station and the UE, the COT being included in a COT message, the COT indicating a specific time period during which the base station and the LTE are allowed to communicate with each other on an unlicensed frequency band;
calculating a specific time for the first transmission based on the COT and the first offset; and
performing the first transmission at the specific time.

71. An electronic device used at a base station, the electronic device comprising:
processing circuitry configured to perform operations of:
determining a Channel Occupancy Time (COT) associated with the base station and a user equipment (LTE), the COT being included in a COT message, the COT indicating a specific time period during which the base station and the LTE are allowed to communicate with each other on an unlicensed frequency band;
determining whether an expected transmission time for a specific transmission of periodic transmissions with the LTE is within the COT;
in response to the expected transmission time for the specific transmission not being within the COT, determining the specific transmission as a deactivated transmission; and
in response to the expected transmission time for the specific transmission being within the COT, determining the specific transmission as an activated transmission.

72. The electronic device of claim 71, wherein determining the COT comprises:
performing a Listen Before Talk (LBT) operation by the base station; and
determining the COT by the base station based on the LBT operation.

73. The electronic device of claim 72, wherein the periodic transmissions include one of:
a downlink semi-persistent reference signal (SP RS) transmission; or
a semi-persistent scheduling physical downlink shared channel (SPS PDSCH) transmission.

74. The electronic device of claim 71, wherein determining the COT comprises:
determining the COT based on the COT message from the LTE.

75. The electronic device of claim 74, wherein the periodic transmissions include one of:
an uplink semi-persistent sounding reference signal (SP SRS) transmission; or
a configuration granted physical uplink shared channel (CG PUSCH) transmission.

76. The electronic device of claim 71, wherein the processing circuitry is further configured to perform operations of:
performing the activated specific transmission, and not performing the deactivated specific transmission.

77. A method executed at a base station, comprising:
determining a Channel Occupancy Time (COT) associated with the base station and a user equipment (LTE), the COT being included in a COT message, the COT indicating a specific time period during which the base station and the LTE are allowed to communicate with each other on an unlicensed frequency band;
determining whether an expected transmission time for a specific transmission of periodic transmissions with the LTE is within the COT;
in response to the expected transmission time for the specific transmission not being within the COT, determining the specific transmission as a deactivated transmission; and
in response to the expected transmission time for the specific transmission being within the COT, determining the specific transmission as an activated transmission.

78. An electronic device used at a user equipment (UE), the electronic device comprising:
processing circuitry configured to perform operations of:
determining a Channel Occupancy Time (COT) associated with a base station and the UE, the COT being included in a COT message, the COT indicating a specific time period during which the base station and the UE are allowed to communicate with each other on an unlicensed frequency band;
determining whether an expected transmission time for a specific transmission of periodic transmissions with the LTE is within the COT;
in response to the expected transmission time for the specific transmission not being within the COT, determining the specific transmission as a deactivated transmission; and
in response to the expected transmission time for the specific transmission being within the COT, determining the specific transmission as an activated transmission.

79. The electronic device of claim 78, wherein determining the COT comprises:
determining the COT based on the COT message from the base station.

80. The electronic device of claim 79, wherein the periodic transmissions include one of:
a downlink semi-persistent reference signal (SP RS) transmission; or
a semi-persistent scheduling physical downlink shared channel (SPS PDSCH) transmission.

81. The electronic device of claim 78, wherein determining the COT comprises:
performing a Listen Before Talk (LBT) operation by the UE; and
determining the COT by the LTE based on the LBT operation.

82. The electronic device of claim 81, wherein the periodic transmissions include one of:
an uplink semi-persistent sounding reference signal (SP SRS) transmission; or
a configuration granted physical uplink shared channel (CG PUSCH) transmission.

83. The electronic device of claim 78, wherein the processing circuitry is further configured to perform operations of:
performing the activated specific transmission, and not performing the deactivated specific transmission.

84. A method executed at a user equipment (LTE), comprising:
determining a Channel Occupancy Time (COT) associated with a base station and the UE, the COT being included in a COT message, the COT indicating a specific time period during which the base station and the LTE are allowed to communicate with each other on an unlicensed frequency band;
determining whether an expected transmission time for a specific transmission of periodic transmissions with the LTE is within the COT;
in response to the expected transmission time for the specific transmission not being within the COT, determining the specific transmission as a deactivated transmission; and
in response to the expected transmission time for the specific transmission being within the COT, determining the specific transmission as an activated transmission.

85. A computer-readable storage medium having one or more instructions stored thereon, which, when executed by one or more processing circuits of an electronic device, cause the electronic device to perform the method of any one of claims 10, 20, 25, 30, 35, 40, 45, 50, 60, 70, 77, or 84.

86. A computer program product comprising one or more instructions which, when executed by one or more processing circuits of an electronic device, cause the electronic device to perform the method of any one of claims 10, 20, 25, 30, 35, 40, 45, 50, 60, 70, 77, or 84.
